# EUROPEAN PATENT SPECIFICATION

(11) **EP 3 282 605 B1**
(45) Date of publication and mention of the grant of the patent: **05.07.2023**
(21) Application number: 15888305.8
(22) Date of filing: 26.08.2015
(51) Int. Cl.: H04J 3/06

(54) **CONFIGURATION METHOD AND APPARATUS FOR SYNCHRONIZATION NETWORK**
KONFIGURATIONSVERFAHREN UND VORRICHTUNG FÜR SYNCHRONISATIONSNETZWERK
PROCÉDÉ ET APPAREIL DE CONFIGURATION POUR RÉSEAU DE SYNCHRONISATION

(30) Priority: 08.04.2015 CN 201510163644
(43) Date of publication of application: 14.02.2018
(73) Proprietor: ZTE Corporation, Shenzhen, Guangdong 518057 (CN)
(72) Inventor: LUO, Bin, Shenzhen, Guangdong 518057 (CN)
(74) Representative: Canzler & Bergmeier Patentanwälte Partnerschaft mbB
(86) International application number: PCT/CN2015/088149
(87) International publication number: WO 2016/161751

(56) References cited:
- EP-A1- 2 148 459
- WO-A1-98/37651
- CN-A- 102 843 205
- CN-A- 102 868 516
- CN-A- 102 957 545
- CN-A- 103 929 294
- US-A1- 2010 020 787
- UEMATSU Y ET AL: "High-quality clock distribution method with fast-restoration for synchronous ring networks", COMMUNICATIONS, 1997. ICC '97 MONTREAL, TOWARDS THE KNOWLEDGE MILLENNI UM. 1997 IEEE INTERNATIONAL CONFERENCE ON MONTREAL, QUE., CANADA 8-12 JUNE 1, NEW YORK, NY, USA,IEEE, US, vol. 3, 8 June 1997 (1997-06-08), pages 1582-1586, XP010227019, DOI: 10.1109/ICC.1997.595054 ISBN: 978-0-7803-3925-5

## Description

### TECHNICAL FIELD

The present invention relates to the field of communication technology, and more particularly, to a configuration method, a configuration apparatus for a synchronization network and a computer readable storage medium.

### BACKGROUND

With rapid development of new communication technologies and new businesses, bandwidth of communication network keeps growing, the transmission rate keeps increasing, and networks are getting more merged with one another. Facing competition in the telecommunications market, communication enterprises need to introduce new technologies to improve service quality, to develop from the competition. At present, new data services such as e-commerce, multimedia communications, IP telephone are new growth points of telecommunication business. For traditional business, there are demands for enterprises interconnection and inter-network settlements. Moreover, communications business involves security, authentication and billing, etc. All of these problems demonstrate importance of synchronization networks to modem telecommunications networks.

Synchronization network is one of the support systems for running a telecommunications network, providing synchronization control signals for clocks (or carriers) in telecommunication devices within the telecommunications network to make the operation rates of the telecommunication devices synchronized. The synchronization network is an indispensable part of the telecommunications network. The synchronization network may ensure network timing performance and then ensure the smooth conduction of the key businesses. With the development and application of SDH (Synchronous Digital Hierarchy), ATM (Asynchronous Transfer Mode), CDMA (Code Division Multiple Access), IP (Internet Protocol) and other technologies, a variety of business networks have ever higher requirements on synchronization. The concept of synchronization has gradually evolved from conventional frequency synchronization to clock synchronization (including frequency synchronization and / or time synchronization).

With evolving of telecommunication networks to intelligent and automation networks, intelligence of synchronization network has also been included in the demand list for research. How to configure the synchronization network has become a problem to be solved.

This section provides background information related to the present disclosure which is not necessarily prior art.

Patent document US 2010/0020787 discloses network synchronization technologies, and in particular a method, ad apparatus and a network element for clock tracing.

Document by Y. Uematsu et al., titled "High-quality clock distribution method with fast-restoration for synchronous ring networks", IEEE International Conference on Montreal, vol. 3, dated 8 June 1997, proposes a high-quality clock distribution method for synchronous ring networks.

Patent document WO 98/37651 relates to synchronization of telecommunications network in general, and in particular to synchronization methods in which the network nodes indicate the synchronization status of the transmitted signal.

However, the above-identified issues are not overcome.

### SUMMARY

According to the present invention, a configuration method for a synchronization network and a configuration apparatus for a synchronization network are provided, as defined in the appended claims.

The following is a summary of the subject matter of the detailed description herein. The summary is not intended to limit the protection scope of the claims.

An embodiment of the present invention provides a configuration method for a synchronization network according to appended claim 1. Other different embodiments providing other configuration methods are disclosed according to appended independent claims 3, 6, 8, 11, 12.

An embodiment of the present invention also provides a configuration apparatus for a synchronization network according to appended claim 13. Other different embodiments providing other configuration apparatus are disclosed according to appended independent claims 14, 16, 17, 18, 19.

An embodiment of the present invention also provides a computer readable storage medium, according to appended claim 20.

Through the above solutions, clock configuration of the synchronization network with various topologies and injected clock sources are achieved, and it has at least one of the following advantages: simple, reliable, and may prevent the clocks from forming a loop. This section provides a summary of various implementations or examples of the technology described in the present invention, and is not a comprehensive disclosure of the full scope or all features of the disclosed technology.

### BRIEF DESCRIPTION OF THE DRAWINGS

Figs. 1-12 are diagrams showing examples of clock configuration according to examples 1-12 of the present invention;
Fig. 13 is a flow chart of a method according to an embodiment of the present invention; and
Fig. 14 is a block diagram of an apparatus according to an embodiment of the present invention.

### DETAILED DESCRIPTION

In order to make the objectives, technical solutions and advantages of the embodiments of the present invention become clearer, the embodiments of the present invention will be described in detail hereinafter with reference to the accompanying drawings. It is should be noted that the embodiments and features in the embodiments in the present application may be combined with each other if no confliction is caused.

### First Embodiment

The present embodiment relates to a configuration method for a synchronization network.

The synchronization network mentioned herein may refer to an entire network or a local network. From the topological point of view, it may be a single ring (not interconnected with other rings), multiple rings interconnected with each other, a chain or a combination thereof, and the like.

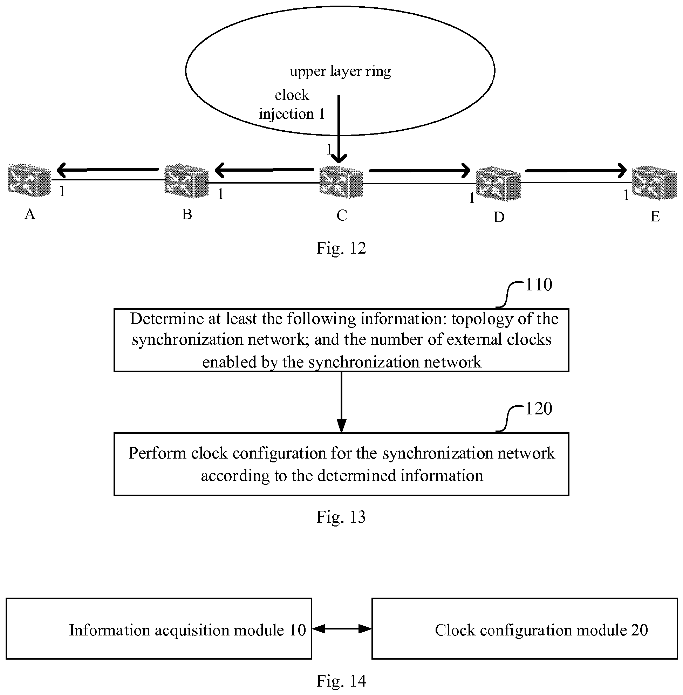

As shown in Fig. 13, the configuration method for a synchronization network according to the present embodiment includes the following steps.

At step 110, at least the following information is determined: topology of the synchronization network; and the number of external clocks enabled by the synchronization network.

At step 120, clock configuration is performed for the synchronization network according to the determined information.

Accordingly, the present embodiment also provides a configuration apparatus for a synchronization network. As shown in Fig. 14, the apparatus includes an information acquisition module 10 and a clock configuration module 20.

The information acquisition module 10 is configured to determine at least the following information: topology of the synchronization network; and the number of external clocks enabled by the synchronization network.

The clock configuration module 20 configured to perform clock configuration for the synchronization network according to the determined information.

The topology of the synchronization network includes a ring and a chain. The ring topology may be divided into single ring or interconnected rings. For a single ring, the enabled external clock may be injected from a single node of the ring (single point injection) or from multiple nodes (such as double point injection). The so-called external clock is a clock extracted from outside of the ring, also known as an extracted external clock. For interconnected rings, a clock extracted from one ring at an interconnection node may be an external clock for another ring. For a ring, the clock configuration may be performed in a ring manner, or may be performed in a shortest-path manner.

Clock configuration for various situations will be described in detail with reference to the following embodiments.

### Second Embodiment

In the present embodiment, the synchronization network includes a ring having an external clock injected at a single point, and the clock configuration is performed for the ring in a ring manner. Specifically, the clock configuration may include the following steps.

For a node having external clock injection in the ring, an extracted external clock is configured.

For each node having no external clock injection in the ring, two chains for extracting clocks from adjacent nodes at both sides thereof are configured, and an extracted clock in an extraction direction being the same as a preset extraction direction of an operation clock of the ring is configured as an operation clock. The extraction direction of an operation clock of the ring is clockwise or counter clockwise.

Correspondingly, the clock configuration module of the present embodiment configures the ring in a ring manner. The clock configuration module may include a first configuration unit and a second configuration unit.

The first configuration unit is configured to, for a node having external clock injection in the ring, configure an extracted clock.

The second configuration unit is configured to, for each node having no external clock injection in the ring, configure two chains for extracting clocks from adjacent nodes at both sides thereof, and configure an extracted clock in an extraction direction being the same as a preset extraction direction of an operation clock of the ring, as an operation clock, the extraction direction of an operation clock of the ring being clockwise or counter clockwise.

In the embodiment, there may be the following different scenarios.

First, the ring is a single ring.

Second, the ring is interconnected at least with another ring, and a non-interconnection node in the ring has external clock injection.

Third, the ring is interconnected with at least another ring, other nodes than a node for interconnecting with the ring in the another ring have external clock injection, and each interconnection node of the ring and the another ring is regarded as a node having external clock injection in the ring.

### Third Embodiment

In the present embodiment, the synchronization network includes a ring having external clocks injected at double points, and the clock configuration is performed for the ring in a ring manner. The clock configuration may include the following steps.

For each node having no external clock injection in the ring, two chains for extracting clocks from adjacent nodes at both sides thereof are configured, and an extracted clock in an extraction direction being the same as a preset extraction direction of an operation clock of the ring is configured as an operation clock. The extraction direction of an operation clock of the ring is clockwise or counter clockwise.

One of two nodes having external clock injection in the ring is configured as a main operation node, and another of the two nodes is configured as a standby operation node. For the main operation node, an extracted external clock is configured and one chain for extracting a clock from an adjacent node at one side in an extraction direction being opposite to the extraction direction of the operation clock of the ring is configured. For the standby operation node, an extracted external clock is configured, and one chain for extracting a clock from an adjacent node at one side in an extraction direction being the same as the extraction direction of the operation clock of the ring is configured, and the extracted clock of the chain is configured as the operation clock.

Correspondingly, the clock configuration module of the present embodiment configures the ring in a ring manner. The clock configuration module may include a first configuration unit and a second configuration unit.

The first configuration unit is configured to, for each node having no external clock injection in the ring, configure two chains for extracting clocks from adjacent nodes at both sides thereof, and configure an extracted clock in an extraction direction being the same as a preset extraction direction of an operation clock of the ring, as an operation clock. The extraction direction of an operation clock of the ring is clockwise or counter clockwise.

The second configuration unit is configured to configure one of two nodes having external clock injection in the ring as a main operation node, and another of the two nodes as a standby operation node. For the main operation node, the second configuration unit configures an extracted external clock and configures one chain for extracting a clock from an adjacent node at one side in an extraction direction being opposite to the extraction direction of the operation clock of the ring. For the standby operation node, the second configuration unit configures an extracted external clock and configures one chain for extracting a clock from an adjacent node at one side in an extraction direction being the same as the extraction direction of the operation clock of the ring, and configures the extracted clock of the chain as the operation clock.

In the embodiment, there may be the following scenarios.

First, the ring is a single ring.

Second, the ring is interconnected at least with another ring, and two non-interconnection nodes in the ring have external clock injection.

Third, the ring is interconnected with at least another ring, other nodes than an interconnection node in the two rings have external clock injection, each interconnection node of the ring and the another ring is regarded as a node having external clock injection in the ring, the ring being performed with clock configuration, and a node being regarded as having external clock injection in the ring has different operation states in the two rings to which the node belongs. The operation states referring to main operation or standby operation.

Fourth, the ring is interconnected with at least another two rings, each node other than a node interconnected with the ring in the another two rings has external clock injection, each node interconnected with each of the another two rings in the ring is regarded as a node having external clock injection in the ring, clock configuration is performed on the ring; and each node being regarded as having external clock injection in the ring has different operation states in the two rings to which the node belongs.

According to an exemplary embodiment, if two interconnection nodes are regarded as one node, the method further includes: determining the operation states of the two interconnection nodes as standby main rings; configuring two chains of extracted clocks in two directions between the two interconnection nodes, or configuring one chain in an extraction direction being the same as the extraction direction of an operation clock of the main ring, and configuring the extracted clock in an extraction direction being the same as the extraction direction of an operation clock of the main ring as the operation clock. Correspondingly, the clock configuration module also includes a third configuration unit. The third configuration unit is configured to determine the operation states of the two interconnection nodes as standby main rings; configure two chains of extracted clocks in two directions between the two interconnection nodes, or configure one chain in an extraction direction being the same as the extraction direction of an operation clock of the main ring, and configure the extracted clock in an extraction direction being the same as the extraction direction of an operation clock of the main ring as the operation clock.

### Fourth Embodiment

In the present embodiment, the synchronization network includes a ring having an external clock injected at a single point, and the clock configuration is performed for the ring in a in a shortest-path manner. The clock configuration may include the following steps.

For a node having external clock injection in the ring, an extracted external clock is configured.

For each node having no external clock injection in the ring, a shortest path from the node to a node having external clock injection is determined. For the node, two chains for extracting clocks from adjacent nodes at both sides thereof arc configured, and an extracted clock of one of the chains located on the shortest path is configured as the operation clock.

The shortest path may be determined by a variety of methods. An extraction path from the node to a node having external clock injection being the shortest may refer to that the number of nodes on the path for extracting the operation clock from the node to the clock node is minimum, or a length of the chain is minimum, or a weighted sum of the number of nodes and the length of chains is minimum, and so on. For example, within a ring having single point injection, there are two possible paths from a node having no clock injection to a node having clock injection. Within a ring of double point injection, there are four possible paths from a node having no clock injection to a node having clock injection. The shortest path may be determined by comparison.

Correspondingly, the clock configuration module of the present embodiment configures the ring in the shortest path manner. The clock configuration may include a first configuration unit and a second configuration unit.

The first configuration unit is configured to, for a node having external clock injection in the ring, configure an extracted external clock.

The second configuration unit is configured to, for each node having no external clock injection in the ring, determine a shortest path from the node to a node having external clock injection, configure for the node two chains for extracting clocks from adjacent nodes at both sides thereof, and configuring an extracted clock of one of the chains located on the shortest path as the operation clock.

In the embodiment, there may be the following scenarios.

First, the ring is a single ring.

Second, the ring is interconnected at least with another ring, and a non-interconnection node in the ring has external clock injection.

Third, the ring is interconnected with at least another ring at a single point, other nodes than the node for interconnecting with the node in the another ring have external clock injection, and the interconnection node is a node having external clock injection in the ring.

### Fifth Embodiment

In the present embodiment, the synchronization network includes a ring having external clocks injected at double points, and the clock configuration is performed for the ring in a shortest-path manner. The clock configuration may include the following steps.

For each node having external clock injection in the ring, an extracted external clock is configured and at least one chain for extracting a clock from an adjacent node at one side thereof is configured.

For each node having no external clock injection in the ring, a shortest path from the node to a node having external clock injection is determined. For the node, two chains for extracting clocks from adjacent nodes at both sides thereof are configured, and an extracted clock of one of the chains located on the shortest path is configured as the operation clock.

Correspondingly, the clock configuration module of the present embodiment configures the ring in a shortest-path manner. The clock configuration module includes a first configuration unit and a second configuration unit.

The first configuration unit is configured to, for each node having external clock injection in the ring, configure an extracted external clock and configure at least one chain for extracting a clock from an adjacent node at one side thereof.

The second configuration unit is configured to, for each node having no external clock injection in the ring, determine a shortest path from the node to a node having external clock injection, configure for the node two chains for extracting clocks from adjacent nodes at both sides thereof, and configure an extracted clock of a chain located on the shortest path as the operation clock.

According to an exemplary embodiment, for each node having external clock injection in the ring, configuring at least one chain for extracting a clock from an adjacent node at one side thereof includes: if there is a common adjacent node between two nodes, for each of the two nodes, configuring only one chain for extracting an external clock from a non-common adjacent node. Correspondingly, the first configuration unit configuring, for each of the two nodes having external clock injection in the ring, at least one chain for extracting a clock from an adjacent node at one side thereof includes: if there is a common adjacent node between the two nodes, for each of the two nodes, configuring only one chain for extracting an external clock from a non-common adjacent node.

In the present embodiment, there may be the following scenarios.

First, the ring is a single ring.

Second, the ring is interconnected with at least another ring at double points, other nodes than the node for interconnecting with the node in the another ring have external clock injection, and the two nodes for interconnecting the ring and the another ring are two nodes having external clock injection in the ring.

### Sixth Embodiment

In the present embodiment, the synchronization network includes two interconnected rings. In each of the rings, a node other than a node for interconnecting the two rings has external clock injection. The clock configuration is performed for the two rings in a shortest-path manner. The clock configuration may include the following steps.

For each interconnection node of the two rings, a shortest path from the node to a node having external clock injection in the two rings is determined. For the node, a plurality of chains for extracting clocks from adjacent nodes thereof are determined, and an extracted clock of one of the chains located on the shortest path is configured as the operation clock. For each non-interconnection node of the two rings, a shortest path from the node to a node having external clock injection in the same ring is determined. For the node, two chains for extracting clocks from adjacent nodes at both sides thereof are determined, and an extracted clock of one of the chains located on the shortest path is configured as the operation clock. For each node having external clock injection in the two rings, an extracted clock is configured and two chains for extracting clocks from adjacent nodes at both sides thereof are configured.

Correspondingly, the clock configuration module of the present embodiment configures the two rings in a shortest-path manner. The clock configuration module may include a first configuration unit, a second configuration unit and a third configuration unit.

The first configuration unit is configured to, for each interconnection node of the two rings, determine a shortest path from the node to a node having external clock injection in the two rings, configure for the node a plurality of chains for extracting clocks from adjacent nodes thereof, and configure an extracted clock of one of the chains located on the shortest path as the operation clock.

The second configuration unit is configured to, for each non-interconnection node of the two rings, determine a shortest path from the node to a node having external clock injection in the same ring, configure for the node two chains for extracting clocks from adjacent nodes at both sides thereof, and configure an extracted clock of one of the chains located on the shortest path as the operation clock.

The third configuration unit is configured to, for each node having external clock injection in the two rings, configure an extracted clock and configure two chains for extracting clocks from adjacent nodes at both sides thereof.

### Seventh Embodiment

In the present embodiment, the synchronization network includes a chain having external clocks injected at a single point, and the clock configuration is performed for the chain. The clock configuration may include the following steps.

For a node having external clock injection in the chain, an extracted external clock is configured.

For each node having no external clock injection in the chain, one chain for extracting a clock from an adjacent node at one side thereof which is closest to a node having clock injection in the ring is configured.

Correspondingly, the clock configuration module of the present embodiment performs clock configuration for the chain. The clock configuration may include a first configuration unit and a second configuration unit.

The first configuration unit is configured to, for a node having external clock injection in the chain, configure an extracted external clock.

The second configuration unit is configured to, for each node having no external clock injection in the chain, configure one chain for extracting a clock from an adjacent node at one side thereof which is closest to a node having clock injection in the ring.

### Eighth Embodiment

An embodiment of the present invention also provide a computer readable storage medium for storing program instructions which, if being executed by a processer, implement the configuration method for a synchronization network provided by any one of the first to the seventh embodiments of the present invention.

The method according to the embodiments will be described below with reference to some examples.

In these examples, for a ring configuration, an extraction direction of an operation clock of the ring can be set. In the figures of these examples, the extraction direction of an operation clock of the ring is counter clockwise, for example. However, it may also be clockwise.

In these examples, the core rings and/or chains may be divided into the following types: a single core ring, multiple core rings, and a core chain. The number of nodes of a ring for injection of a clock source may be one or more. The core ring is a ring network of a designated core according to users' demands. The core chain is a chain network of a designated core according to users' demand.

To configure a ring, for each of single point injection and double point injection of the clock source, there are two configuration manners: a ring manner and a shortest-path manner.

For configuring a ring of the double point injection in the ring manner, clock sources (i.e. the external clocks) are divided into a main operation clock source and a standby operation clock source. For configuring a ring of double point injection in the shortest-path manner, the clock sources are not divided into a main operation clock source and a standby operation clock source. Herein, if the clock sources are not divided into a main operation clock source and a standby operation clock source, all the clock sources are regarded as main operation clock sources by default.

The operation clock of a node for injecting a clock is an injection clock source, and a route on the node for injecting a clock extracts a standby clock.

For configuration manner of a non-core ring and/ or chain, if a clock has been configured for a node for interconnecting with the ring and/ or chain in the upper layer, clock configuration is not performed again in the present layer.

During configuration, the rules for extracting a clock by a plurality of chains between nodes are as follows. If there are clock mutual-extractions in two directions between the nodes, there is at most one chain for mutual-extraction. If there is only a clock extraction in one direction between the nodes, there may be at most two chains for extraction. The clock chain may adopt optical port priority, high rate port priority principle.

During configuration, the rules for the ring direction setting are as follows. For a ring manner, it is required to prescribe a clockwise direction and a counter clockwise direction uniformly. For example, the direction may be taken according to the following rules: selecting one clock node or a node for injecting a clock on the ring; acquiring two network elements adjacent to the node; and taking a direction from the node to a network element with a larger ID as a counter clockwise direction.

### First Example

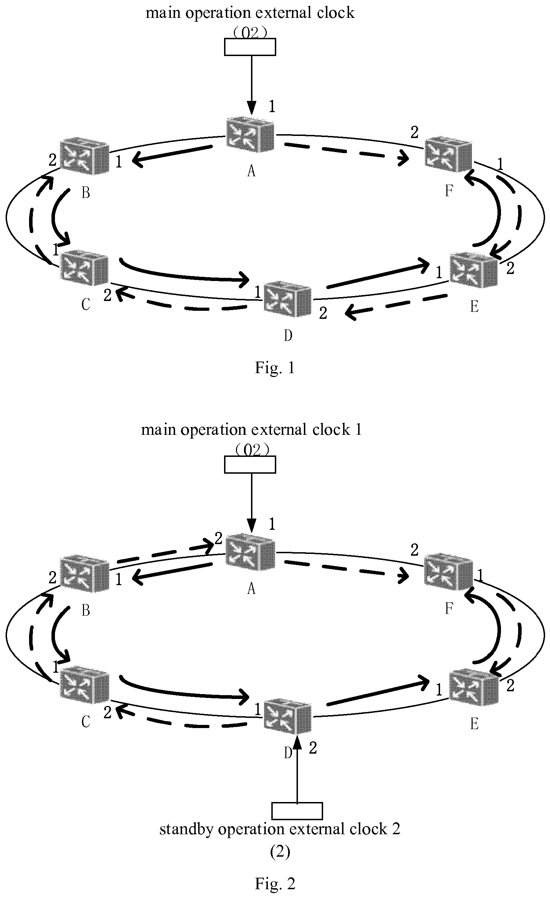

As shown in Fig. 1, a core ring is composed of nodes A, B, C, D, E and F. The core ring has only one external clock source (briefly referred to as an external clock) injected at the node A. Therefore, A is a clock node (also referred to as a node for injecting a clock). The rule of ring manner configuration is adopted.

Only an extracted external clock is configured for the clock node A, and the priority for the extracted clock is the highest, which is 1.

Taking the clock node A as a starting point, a route turning to the adjacent node F in the counter clockwise direction (that is, from the node A to B, to C, to D, to E and to F) is the extraction route of the operation clock (represented by a solid line in the figure, and composed of chains for extracting the operation clock between adjacent nodes on the route). In an opposite direction, taking the clock node A as a starting point, a route turning to the adjacent node B in the clockwise direction (that is, from the node A to F, to E, to D, to C and to B) is a route for extracting a protection clock (represented by a dashed line in the figure, and composed of chains for extracting the protection clock between adjacent nodes on the route).

The priority of extracting a clock is 1 for the port of extracting the operation clock on each node, and the port with a lower priority of extracting a clock is the port for extracting the protection clock.

The configuration for the ring in Fig. 1 corresponds to the first scenario in the second embodiment.

### Second Example

As shown in Fig. 2, a core ring is composed of nodes A, B, C, D, E and F. The core ring has two external clock sources injected at node A and D, respectively. Therefore, both A and D are clock nodes. The rule of ring manner configuration is adopted.

The node A is set as a main clock node, and the node D is set as a standby clock node. Taking the main clock node A as a starting point, a route turning to the adjacent node F in the counter clockwise direction (that is, from the node A to B, to C, to D, to E and to F) is the extraction route of the operation clock.

Taking the standby clock node D as a starting point, a route turning to the adjacent node E in the clockwise direction (that is, from the node D to C, to B, to A, to F and to E) is the extraction route of the protection clock.

The priority of extracting a clock is 1 for the port of extracting the operation clock on each node, and the port with a lower priority of extracting a clock is the port for extracting the protection clock.

The configuration for the ring in Fig. 2 corresponds to the first scenario in the third embodiment.

### Third Example

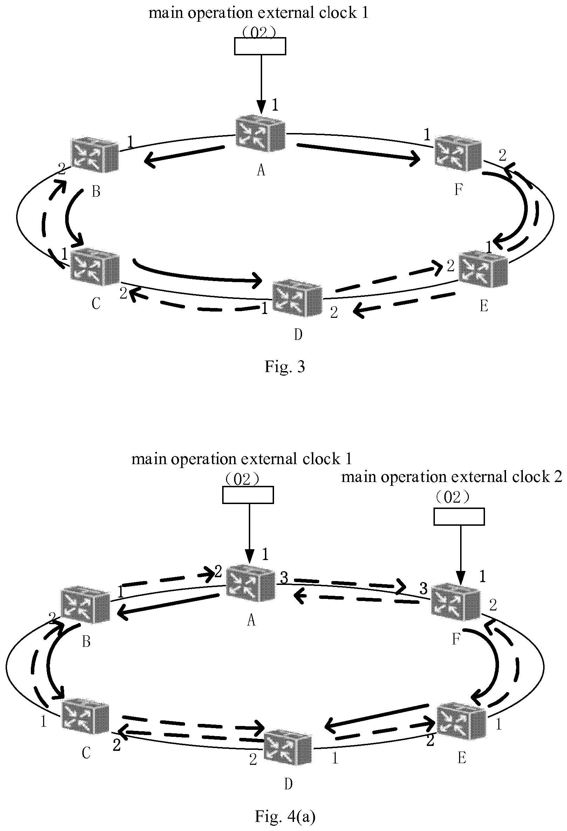

As shown in Fig. 3, a core ring is composed of nodes A, B, C, D, E and F. The core ring has only one external clock source injected at the node A. Therefore, A is a clock node. The rule of the shortest-path manner configuration is adopted.

Only an extracted external clock is configured for the clock node A.

For the node B, a chain on the shortest path from the node B to the clock node A is the extraction chain for the operation clock (that is, from the node A to B). The chain in the direction opposite to that of the extraction chain for the operation clock is the extraction chain for the protection clock (that is, from the node C to B).

Other nodes are all configured in the same shortest-path manner as for the node B.

The priority of extracting a clock is 1 for the port of extracting the operation clock on each node, and the port with a lower priority of extracting a clock is the port for extracting the protection clock.

The configuration for the ring in Fig. 3 corresponds to the first scenario in the fourth embodiment.

### Fourth Example

As shown in Fig. 4(a), a core ring is composed of nodes A, B, C, D, E and F. The core ring has two external clock sources injected at node A and F respectively. Therefore, both A and F are clock nodes. The rule of the shortest-path manner configuration is adopted.

The two external clock sources arc not classified into a main clock source and a standby clock source, and thus both the node A and the node F are main operation clock nodes.

If the operation clocks of the clock nodes A and F are external clock sources (that is, extracted external clocks, or extracted/acquired external clock). The extracted clock priority is 1. Other chain port on the clock node is also for extracting a clock. The extracted clock priority for the other port is lower, and the port is a port for extracting a protection clock.

For the node B, the path from the node B to the clock node A is the shortest. Therefore, this chain is taken as the extraction chain for the operation clock of the node B (that is, from the node A to the node B). The chain in the direction opposite to that of the extraction chain for the operation clock is the extraction chain for the protection clock (that is, from the node C to B).

For the node E, the path from the node E to the clock node F is the shortest. Therefore, this chain is taken as the extraction chain for the operation clock of the node E (that is, from the node F to the node E). The chain in the direction opposite to that of the extraction chain for the operation clock is the extraction chain for the protection clock (that is, from the node D to E).

Other nodes are all configured in the same shortest-path manner as for the nodes B and E.

The priority of extracting a clock is 1 for the port of extracting the operation clock on each node, and the port with a lower priority of extracting a clock is the port for extracting the protection clock.

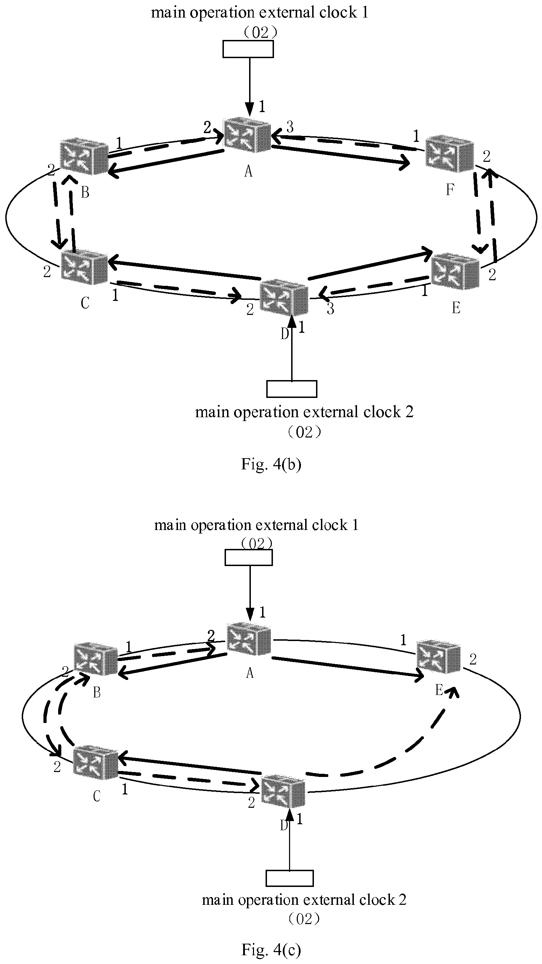

As shown in Fig. 4(b), a core ring is composed of nodes A, B, C, D, E and F. The core ring has two external clock sources injected at node A and D, respectively. Therefore, both A and D are clock nodes. The rule of the shortest-path manner configuration is adopted.

The two external clock sources are not classified into a main clock source and a standby clock source, and thus both the node A and the node D are main operation clock nodes.

If the operation clocks of the clock nodes A and D are external clock sources. The priority of extracting a clock is 1. Other chain port on the clock node is also for extracting a clock. The priority of extracting a clock is lower, and the port is a port for extracting a protection clock.

For the node B, the path from the node B to the clock node A is the shortest. Therefore, this chain is taken as the extraction chain for the operation clock of the node B (that is, from the node A to the node B). The chain in the direction opposite to that of the extraction chain for the operation clock is the extraction chain for the protection clock (that is, from the node C to B).

For the node E, the path from the node E to the clock node D is the shortest. Therefore, this chain is taken as the extraction chain for the operation clock of the node E (that is, from the node D to the node E). The chain in the direction opposite to that of the extraction chain for the operation clock is the extraction chain for the protection clock (that is, from the node F to E).

Other nodes are all configured in the same shortest-path manner as for the nodes B and E.

The priority of extracting a clock is 1 for the port of extracting the operation clock on each node, and the port with a lower priority of extracting a clock is the port for extracting the protection clock.

As shown in Fig. 4(c), a core ring is composed of nodes A, B, C, D, E and F. The core ring has two external clock sources injected at node A and D, respectively. Therefore, both A and D are clock nodes. The rule of the shortest-path manner configuration is adopted.

The two external clock sources are not classified into a main clock source and a standby clock source, and thus both the node A and the node D are main operation clock nodes.

If the operation clocks of the clock nodes A and D are external clock sources. The priority of extracting a clock is 1. Other chain port on the clock node is also for extracting a clock. The priority of extracting a clock is lower, and the port is a port for extracting a protection clock. Since there in only one node E between the clock nodes A and D, in order for the clocks not to form a loop (that is, if the clock source fails, the clock extraction process will not form a loop, otherwise the network clocks will form an endless cycle, and is unable to perform timing), the clock nodes A and D cannot extract a clock from the node E.

For the node B, the path from the node B to the clock node A is the shortest. Therefore, this chain is taken as the extraction chain for the operation clock of the node B (that is, from the node A to the node B). The chain in the direction opposite to that of the extraction chain for the operation clock is the extraction chain for the protection clock (that is, from the node C to B).

Other nodes are all configured in the same shortest-path manner as for the nodes B and E. The priority of extracting a clock is 1 for the port of extracting the operation clock on each node, and the port with a lower priority of extracting a clock is the port for extracting the protection clock.

The configuration for the ring in Figs. 4 (a)-(c) corresponds to the first scenario in the fifth embodiment. In Fig. 4 (c), there is a common adjacent node between two clock injection nodes.

### Fifth Example

If a plurality of core rings are interconnected, the interconnection may be realized by a single node or double nodes. In this example, the interconnection by double nodes is taken as an example.

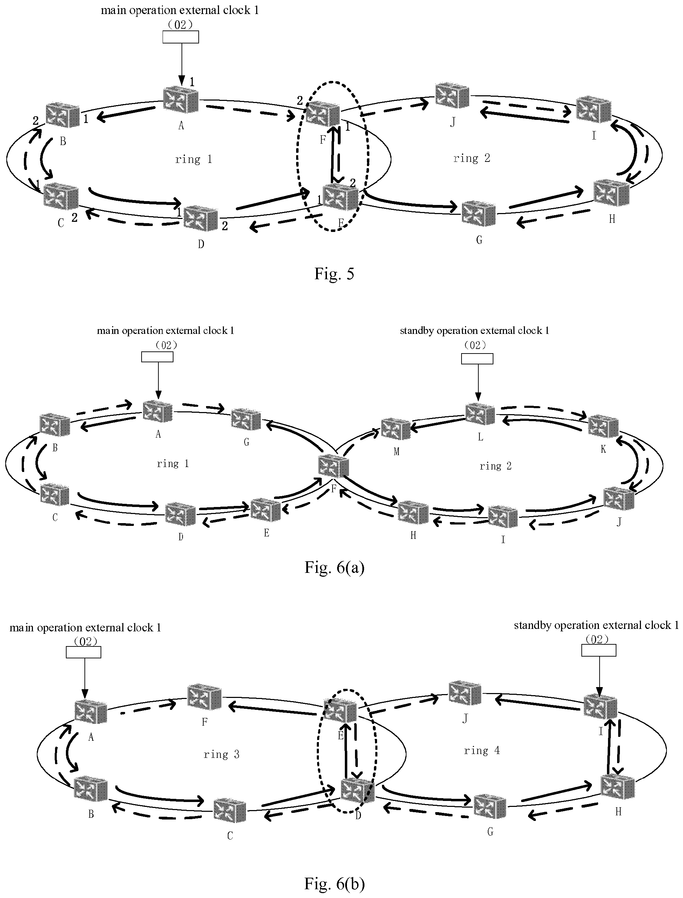

As shown in Fig. 5, two core rings interconnected at double nodes only has one external clock source injected at the node A. Therefore, the node A is a clock node. The interconnection nodes (i.e., the nodes for interconnecting the two rings) are the nodes E and F. The rule of the ring manner configuration is adopted.

Only an extracted external clock is configured for the clock node A.

The external clock source is determined at the ring 1. The ring 1 is configured in the ring manner, as follows.

Taking the clock node A as a starting point, a route turning to the adjacent node F in the counter clockwise direction (that is, from the node A to B, to C, to D, to E and to F) is the extraction route of the operation clock.

Taking the clock node A as a starting point, a route turning to the adjacent node B in the clockwise direction (that is, from the node A to F, to E, to D, to C and to B) is a route for extracting a protection clock.

Since the ring 1 and ring 2 are interconnected at double nodes. For the ring 2, the adjacent nodes E and F (including the chain between the two nodes) are regarded as one node EF (also referred to as a logic connection node, a connection node). Clock mutual-extraction is performed between the two interconnection nodes E and F, to achieve complete communication.

The ring 2 is processed as a lower layer of the ring 1, and is configured in the ring manner as follows.

The logic connection node EF is determined as a clock injection node.

Taking the logic connection node EF as a starting point, a route turning to the adjacent node F in the counter clockwise direction (that is, from the node EF to G, to H, to I, and to J) is the extraction route of the operation clock.

Taking the logic connection node EF as a starting point, a route turning to the adjacent node G in the clockwise direction (that is, from the node EF to J, to I, to H, and to G) is the extraction route of the operation clock.

The priority of extracting a clock is 1 for the port of extracting the operation clock on each node, and the port with a lower priority of extracting a clock is the port for extracting the protection clock.

The configuration for the ring 1 in Fig. 5 corresponds to the second scenario in the second embodiment, and the configuration for the ring 2 in Fig. 5 corresponds to the third scenario in the second embodiment.

### Sixth Example

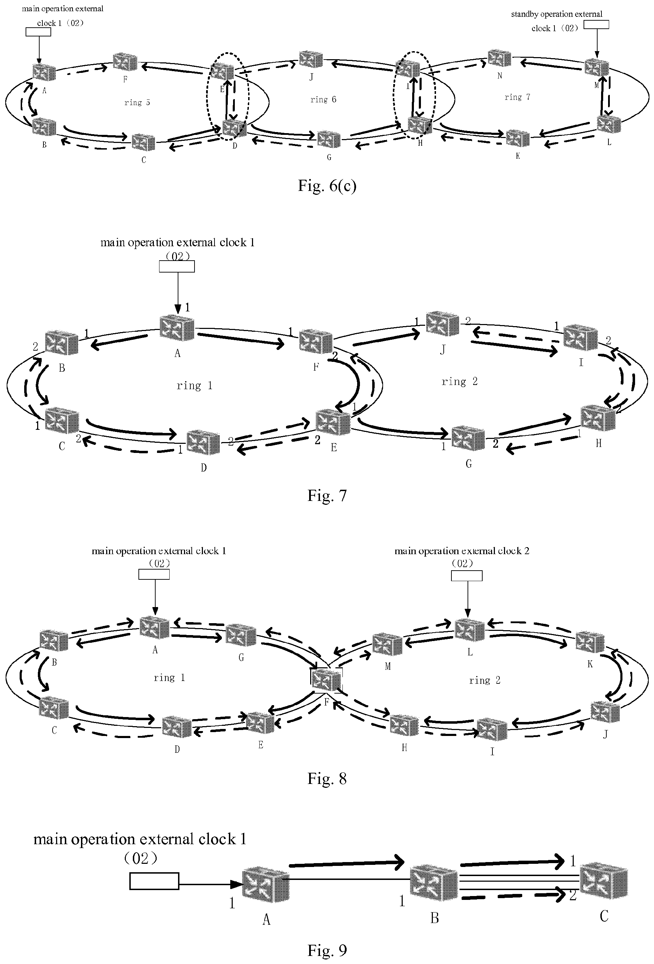

As shown in Fig. 6, two core rings are interconnected by a single node. The interconnected rings have two external clock sources injected at the nodes A and L. Therefore, the nodes A and L are clock nodes. The connection node is node F.

Fig. 6 (a) shows two core rings interconnected by double nodes. The interconnected rings have two external clock sources injected at the node A and the node I. Therefore, the nodes A and I are clock nodes. The connection nodes are the node D and the node E.

Fig. 6 (b) shows three core rings interconnected by double nodes. The interconnected rings have one external clock source injected at the node A and the node M. Therefore, the nodes A and M are clock nodes. The connection nodes are the nodes D, E, H and I.

Fig. 6 (b) adopts the rule of the ring configuration manner.

In the present embodiment, as shown in Fig. 6, there are provided a main external clock source and a standby external clock source.

The interconnected multiple core rings are decomposed into independent single core rings. For core rings interconnected by a single node, as shown in Fig. 6 (a), the interconnected core rings are decomposed into two independent single rings, and the connection node F is a physical node.

For core rings interconnected by double nodes, as shown in Fig. 6 (b) and 6(c), the interconnected core rings are decomposed into a plurality of independent single rings. In Fig. 6(b), for the ring 4, the connection node is one logic connection node DE. The logic connection node includes two physical interconnected nodes D and E, and a physical chain D-E between the two nodes. Similarly, in Fig. 6(b), for the ring 6, the connection node is one logic connection node DE. For the ring 7, the connection node is one logic connection node HI.

There are a plurality of clock injection nodes on the ring. A main clock node and a standby clock node are determined for the ring. The ring where the main clock is located is the main core ring. The clock node of the main core ring is the main clock node of the network. The standby clock is the connection node of the ring where the main clock is located. In the present embodiment, the main core ring in Fig. 6(a) is the ring 1, the main clock node of the ring 1 is the node A, and the standby clock node is the connection node F. The main core ring in Fig. 6(b) is the ring 3, the main clock node of the ring 3 is the node A, and the standby clock node is the logic connection node DE. The main clock node of the ring 5 in Fig. 6(c) is the node A, and the standby clock node in the logic connection node DE.

The connection node closest to the ring where the main clock is located is the main clock injection node. In the present embodiment, in Fig. 6(a), since the connection node F is the connection node closest to the ring 1, the main clock injection node of the ring 2 in Fig. 6(a) is the connection node F, and the clock node L is the standby clock node. Similarly, the main clock injection node of the ring 4 in Fig. 6(b) is the connection node DE, and the standby clock node is the node I. The main clock injection node of the ring 7 in Fig. 6(c) is the connection node HI, and the standby clock node is the node M. It may be seen from here that, the connection node has different operation states in the two rings which the connection node belongs.

The decomposed single rings are configured according to the manner for configuring a single core ring.

If the connection node is the logic node (as shown in Fig. 6 (b) and 6(c)), mutual clock-extraction is performed between the two interconnection nodes, to achieve complete communication.

The configuration for the ring 1 in Fig. 5 corresponds to the second scenario in the second embodiment, and the configuration for the ring 2 in Fig. 5 corresponds to the third scenario in the second embodiment.

The configurations for the rings in Figs. 6 (a), (b) and (c) except for the ring in the middle of the Fig. 6 (c) correspond to the third scenario of the third embodiment, and the configuration for the ring in the middle of the Fig. 6 (c) corresponds to the fourth scenario in the third embodiment.

### Seventh Example

Multiple core rings may be interconnection by a single node or double nodes, and so on. In this example, the interconnection by double nodes is taken as an example.

As shown in Fig. 7, two core rings interconnected by double nodes only has one external clock source injected at the node A. Therefore, the node A is a clock node. The interconnection nodes are the nodes E and F. The rule of the shortest-path manner configuration is adopted.

The clock source is at the ring 1, and the ring 1 is configured in the same way as configuring a single core ring with a single clock source in the shortest-path manner. Specifically, the following configurations may be performed.

Only an extracted external clock is configured for the clock node A.

For the node B, the chain of the shortest path from the node B to the clock node A is the extraction chain for the operation clock of the node B (that is, from the node A to the node B). The chain in the direction opposite to that of the extraction chain for the operation clock is the extraction chain for the protection clock (that is, from the node C to B).

Other nodes on the ring 1 are all configured in the same shortest-path manner as for the node B.

The priority of extracting a clock is 1 for the port of extracting the operation clock on each node, and the port with a lower priority of extracting a clock is the port for extracting the protection clock.

The ring 2 is processed as a lower layer of the ring 1. Specifically, the following configurations are performed.

The interconnection nodes E and F of the ring 1 are all determined as the clock injection nodes of the ring 2.

The configuration manner is the same as that of the main core ring. Since there are two clock injection nodes, the ring 2 is configured in the same way as configuring a single core ring with multiple clock sources in the shortest-path manner. Specifically, the following configurations are performed.

The two external clock sources are not classified into a main clock source and a standby clock source, and thus both of the node E and the node F are main clock injection nodes.

For the node G, the path from the node G to the clock injection node E is the shortest. Therefore, this chain is taken as the extraction chain for the operation clock of the node G (that is, from the node E to the node G). The chain in the direction opposite to that of the extraction chain for the operation clock is the extraction chain for the protection clock (that is, from the node H to G).

For the node J, the path from the node J to the clock injection node F is the shortest. Therefore, this chain is taken as the extraction chain for the operation clock of the node J (that is, from the node F to the node J). The chain in the direction opposite to that of the extraction chain for the operation clock is the extraction chain for the protection clock (that is, from the node I to J).

Other nodes are all configured in the same shortest-path manner as for the nodes G and J. The priority of extracting a clock is 1 for the port of extracting the operation clock on each node, and the port with a lower priority of extracting a clock is the port for extracting the protection clock.

The configuration for the left ring in Fig. 7 corresponds to the second scenario in the fourth embodiment, and the configuration for the right ring in Fig. 7 corresponds to the second scenario in the fifth embodiment.

### Eighth Example

Multiple core rings may be interconnection by a single node, or double nodes, and so on. In this example, the interconnection by a single node is taken as an example.

As shown in Fig. 8, one network is composed of two rings interconnected by a single node. The network has two external clock sources injected at the nodes A and L. Therefore, the nodes A and L are clock nodes. The interconnection node is the node F. The rule of the shortest-path manner configuration is adopted.

The two external clock sources are not classified into a main clock source and a standby clock source, and thus both of the node A and the node L are main clock nodes.

The configuration is performed in the same way as configuring a single core ring with multiple clock sources in the shortest-path manner. Specifically, the following configurations are performed.

For the node B, the path from the node B to the clock node A is the shortest. Therefore, this chain is taken as the extraction chain for the operation clock of the node B (that is, from the node A to the node B). The chain in the direction opposite to that of the extraction chain for the operation clock is the extraction chain for the protection clock (that is, from the node C to B).

For the node M, the path from the node M to the clock node L is the shortest. Therefore, this chain is taken as the extraction chain for the operation clock of the node M (that is, from the node L to the node M). The chain in the direction opposite to that of the extraction chain for the operation clock is the extraction chain for the protection clock (that is, from the node F to M).

For the interconnection node F, the path from the node F to the clock node A is the shortest. Therefore, this chain is taken as the extraction chain for the operation clock of the node F (that is, from the node A to G to F). Other chains (that is, chains from the node E to the node F, from the node H to the node F, from the node M to the node F) are all extraction chains for the protection clock. The chain in the direction opposite to that of the extraction chain for the operation clock (that is, from the node E to F) may be selected as the first extraction chain for the protection clock.

Other nodes are all configured in the same shortest-path manner as for the nodes B and E. The priority of extracting a clock is 1 for the port of extracting the operation clock on each node, and the port with a lower priority of extracting a clock is the port for extracting the protection clock.

The configuration for the two rings in Fig. 8 corresponds to the sixth embodiment.

### Ninth Example

As shown in Fig. 9, one chain-type network is composed of nodes A, B and C. There are 3 chains between the nodes B and C. The entire chain-type network only has one external clock source injected at the point A. Therefore, the node A is the clock node, and the configuration rule is as follows.

An extracted external clock is configured for the clock node A.

The chain on the shortest path from the node B to the clock node A is the extraction chain for the operation clock of the node B. Similarly, the chain on the shortest path from the node C to the clock node A is the extraction chain for the operation clock of the node C.

There are 3 chains between the nodes B and C. Since there is only clock extraction in a single direction (that is, only clock extraction from the node B to C), then at most two chains for extracting a clock may be allowed. The optical port priority, or high rate port priority principle is adopted. One of the ports has the priority of 1, and the other has the priority of 2. The configuration for the nodes on the chain in Fig. 9 corresponds to the second scenario in the seventh embodiment.

### Tenth Example

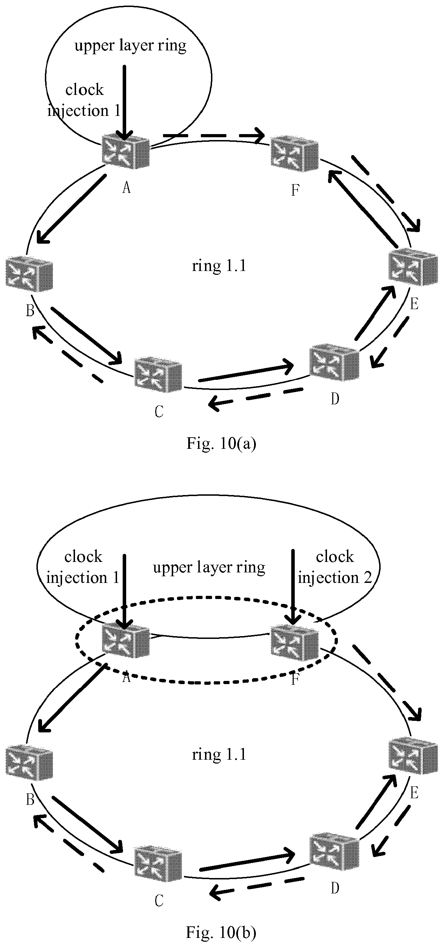

In this example, the ring at the upper layer (for example, the core ring or the non-core ring at the previous upper layer) is configured in the ring manner. As shown in Fig. 10, the non-core ring 1.1 is composed of nodes A, B, C, D, E and F.

An access node is determined as the clock injection node of the non-core ring. In Fig. 10 (a), the node A is the access node for accessing the upper layer, is also the clock injection node of the non-core ring 1.1, and is configured in the same as configuring a ring with interjection at a single point. In Fig. 10 (b), the nodes A and F are the access nodes for accessing the upper layer, and are also the clock injection nodes. The nodes A and F are regarded as one logic connection node AF which is configured in the same way as configuring a ring with interjection at a single point.

### For Fig. 10 (a):

Taking the clock interjection node A as a starting point, a route turning to the adjacent node F in the counter clockwise direction (that is, from the node A to B, to C, to D, to E and to F) is the extraction route of the operation clock.

Taking the clock interjection node A as a starting point, a route turning to the adjacent node B in the clockwise direction (that is, from the node A to F, to E, to D, to C and to B) is a route for extracting a protection clock.

The priority of extracting a clock is 1 for the port of extracting the operation clock on each node, and the port with a lower priority of extracting a clock is the port for extracting the protection clock.

### For Fig. 10 (b):

Taking the node A as a starting point, a route turning to the adjacent node E in the counter clockwise direction (that is, from the node A to B, to C, to D and to E) is the extraction route of the operation clock.

Taking the node F as a starting point, a route turning to the adjacent node B in the clockwise direction (that is, from the node F to E, to D, to C and to B) is a route for extracting a protection clock.

The priority of extracting a clock is 1 for the port of extracting the operation clock on each node, and the port with a lower priority of extracting a clock is the port for extracting the protection clock.

The configurations for the rings in Fig. 10 (a), Fig. 10 (b) correspond to the second scenario in the second embodiment.

### Eleventh Example

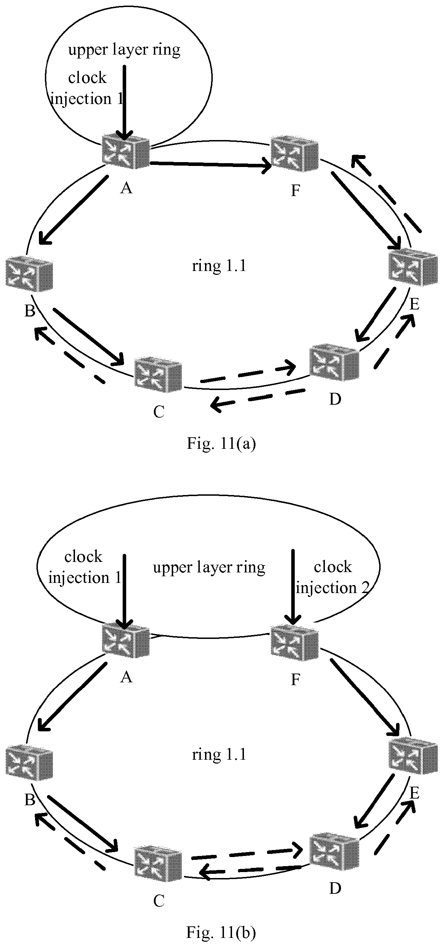

In this example, the ring at the upper layer (for example, the core ring or the non-core ring at the previous upper layer) is configured in the shortest-path manner. As shown in Fig. 11, the non-core ring 1.1 is composed of nodes A, B, C, D, E and F. The configuration is as follows. An access node is determined as the clock injection node of the non-core ring. In Fig. 11 (a), the node A is the access node for accessing the upper layer, also is the clock injection node of the non-core ring 1.1. In Fig. 11 (b). The nodes A and F are the access nodes for accessing the upper layer, and are also the clock injection nodes. The nodes A and F are all main clock injection nodes.

### For Fig. 11 (a):

For the node B, a chain on the shortest path from the node B to the clock injection node A is the extraction chain for the operation clock (that is, from the node A to B). The chain in the direction opposite to that of the extraction chain for the operation clock is the extraction chain for the protection clock (that is, from the node C to B).

Other nodes arc all configured in the same shortest-path manner as for the node B.

The priority of extracting a clock is 1 for the port of extracting the operation clock on each node, and the port with a lower priority of extracting a clock is the port for extracting the protection clock.

### For Fig. 11 (b):

The nodes A and F all main clock injection nodes.

For the node B, a chain on the shortest path from the node B to the clock injection node A is the extraction chain for the operation clock (that is, from the node A to B). The chain in the direction opposite to that of the extraction chain for the operation clock is the extraction chain for the protection clock (that is, from the node C to B).

For the node E, a chain on the shortest path from the node E to the clock injection node F is the extraction chain for the operation clock (that is, from the node F to E). The chain in the direction opposite to that of the extraction chain for the operation clock is the extraction chain for the protection clock (that is, from the node D to E).

Other nodes are all configured in the same shortest-path manner as for the nodes B and E. The priority of extracting a clock is 1 for the port of extracting the operation clock on each node, and the port with a lower priority of extracting a clock is the port for extracting the protection clock.

The configuration for the ring in Fig. 11(a) corresponds to the third scenario in the fourth embodiment. The configuration for the ring in Fig. 11(b) corresponds to the second scenario in the fifth embodiment.

### Twelfth Example

In this example, the clock extraction is performed in a single direction. As shown in Fig. 12, the node C of the non-core chain is a clock injection node, and the configuration rule is as follows.

The access node C is determined as a clock injection node of the non-core chain.

The configuration is the same as configuring a core chain, that is, the shortest path from each node (A, B, D and E) to the clock injection node C is the route for extracting the operation clock of the node.

For a chain structure, there is no situation of clock injection at multiple points, becauser if there is clock injection at multiple points, a loop is certainly formed.

It should be noted that, although in the examples herein, the core rings and the non-core rings are described differently, for the clock configuration, the types thereof may be not taken into consideration, but corresponding configuration is adopted depending on the topology.

It will be understood by those ordinary skilled in the art that all or a portion of the steps of the embodiments described above may be implemented in processes of a computer program that may be stored in a computer readable storage medium. The computer program may be executed on a corresponding hardware platform (such as a system, a device, an apparatus, a means, etc.). If being executed, the computer program causer corresponding devices to perform one or combination of the steps of the method according to the embodiments.

Alternatively, all or part of the steps of the embodiments described above may also be implemented in an integrated circuit. These steps may be separately integrated into integrated circuit modules or a plurality of modules or steps thereof may be implemented as a single integrated circuit module.

The devices/functional modules/functional units in the above embodiments may be implemented by a general-purpose computing device, which may be integrated on a single computing device or may be distributed over a network of a plurality of computing devices.

The devices/functional modules/functional units in the above embodiments may be stored in a computer-readable storage medium in the form of software function modules and sold or used as a stand-alone product. The above-mentioned computer-readable storage medium may be a read-only memory, a magnetic disk, or an optical disk.

## Claims

1. A configuration method for a synchronization network, comprising:
determining (110) at least the following information: topology of the synchronization network, and the number of external clocks enabled by the synchronization network; and
performing (120) clock configuration for the synchronization network according to the determined information,
wherein:
if the synchronization network comprises a ring having an external clock injected at a single point, configuring the synchronization network comprises: performing the clock configuration for the ring in a ring manner by:
for a node having external clock injection in the ring, configuring an extracted external clock; and
for each node having no external clock injection in the ring, configuring two chains for extracting clocks from adjacent nodes at both sides of the node, and configuring an extracted clock in an extraction direction being the same as a preset extraction direction of an operation clock of the ring, as an operation clock, the extraction direction of the operation clock of the ring being clockwise or counter clockwise.

2. The configuration method according to claim 1, wherein:
the ring is a single ring; or
the ring is interconnected at least with another ring, and a non-interconnection node in the ring has external clock injection; or
the ring is interconnected with at least another ring, other nodes than a node for interconnecting with the ring in the another ring has external clock injection, and interconnection nodes of the ring and the another ring are regarded as nodes having external clock injection in respective rings.

3. A configuration method for a synchronization network, comprising:
determining (110) at least the following information: topology of the synchronization network, and the number of external clocks enabled by the synchronization network; and
performing (120) clock configuration for the synchronization network according to the determined information,
wherein:
if the synchronization network comprises a ring having external clocks injected at double points, configuring the synchronization network comprises: performing the clock configuration for the ring in a ring manner by:
for each node having no external clock injection in the ring, configuring two chains for extracting clocks from adjacent nodes at both sides of the node, and configuring an extracted clock in an extraction direction being the same as a preset extraction direction of an operation clock of the ring, as an operation clock, the extraction direction of the operation clock of the ring being clockwise or counter clockwise; and
configuring one of two nodes having external clock injection in the ring as a main operation node, and another of the two nodes as a standby operation node; for the main operation node, configuring an extracted external clock and configuring one chain for extracting a clock from an adjacent node at one side of the main operation node in an extraction direction being opposite to the extraction direction of the operation clock of the ring; and for the standby operation node, configuring an extracted external clock and configuring one chain for extracting a clock from an adjacent node at one side of the standby operation node in an extraction direction being the same as the extraction direction of the operation clock of the ring, and configuring the extracted clock of the chain as the operation clock.

4. The configuration method according to claim 3, wherein:
the ring is a single ring; or
the ring is interconnected at least with another ring, and two non-interconnection nodes in the ring have external clock injection; or
the ring is interconnected with at least another ring, other nodes than an interconnection node in the two rings have external clock injection, and interconnection nodes of the ring and the another ring are regarded as one node having external clock injection in respective rings, the ring is performed with clock configuration; and the one node being regarded as having external clock injection has different operation states in the two rings to which the node belongs; or
the ring is interconnected with at least another two rings, each node other than a node interconnected with the ring in the another two rings has external clock injection, all nodes interconnected with each of the another two rings in the ring are regarded as one node having external clock injection in the ring, the ring is performed with clock configuration; and the one node being regarded as having external clock injection has different operation states in the two rings to which the node belongs.

5. The configuration method according to claim 4, wherein:
if two interconnection nodes are regarded as one node, the method further comprises:
determining the operation states of the two interconnection nodes as standby main rings;
configuring two chains of extracted clocks in two directions between the two interconnection nodes, or configuring one chain in an extraction direction being the same as the extraction direction of an operation clock of the main ring, and configuring the extracted clock in an extraction direction being the same as the extraction direction of the operation clock of the main ring as the operation clock.

6. A configuration method for a synchronization network, comprising:
determining (110) at least the following information: topology of the synchronization network, and the number of external clocks enabled by the synchronization network; and
performing (120) clock configuration for the synchronization network according to the determined information,
wherein
if the synchronization network comprises a ring having an external clock injected at a single point, configuring the synchronization network comprises: performing the clock configuration for the ring in a shortest-path manner by:
for a node having external clock injection in the ring, configuring an extracted external clock; and
for each node having no external clock injection in the ring, determining a shortest path from the node having no external clock injection to a node having external clock injection, configuring for the node having no external clock injection two chains for extracting clocks from adjacent nodes at both sides of the node having no external clock injection, and configuring an extracted clock of one of the chains located on the shortest path as the operation clock.

7. The configuration method according to claim 6, wherein:
the ring is a single ring; or
the ring is interconnected at least with another ring, and a non-interconnection node in the ring has external clock injection; or
the ring is interconnected with at least another ring at a single point, other nodes than the node for interconnecting with the ring in the another ring has external clock injection, and the interconnection node is a node having external clock injection in the ring.

8. A configuration method for a synchronization network, comprising:
determining (110) at least the following information: topology of the synchronization network, and the number of external clocks enabled by the synchronization network; and
performing (120) clock configuration for the synchronization network according to the determined information,
wherein:
if the synchronization network comprises a ring having external clocks injected at double points, configuring the synchronization network comprises: performing the clock configuration for the ring in a shortest-path manner, by:
for each node having external clock injection in the ring, configuring an extracted external clock and configuring at least one chain for extracting a clock from an adjacent node at one side of the node having external clock injection; and
for each node having no external clock injection in the ring, determining a shortest path from the node having no external clock injection to a node having external clock injection, configuring for the node having no external clock injection two chains for extracting clocks from adjacent nodes at both sides of the node having no external clock injection, and configuring an extracted clock of one of the chains located on the shortest path as the operation clock.

9. The configuration method according to claim 8, wherein:
for each node having external clock injection in the ring, configuring at least one chain for extracting a clock from an adjacent node at one side of the node having external clock injection comprises:
if a common adjacent node exists between two nodes having external clock injection, for each of the two nodes, configuring only one chain for extracting an external clock from a non-common adjacent node for the node having external clock injection.

10. The configuration method according to claim 8 or 9, wherein:
the ring is a single ring; or
the ring is interconnected with at least another ring at double points, other nodes than the node for interconnecting with the ring in the another ring has external clock injection, and the two nodes for interconnecting the ring and the another ring are two nodes having external clock injection in the ring.

11. A configuration method for a synchronization network, comprising:
determining (110) at least the following information: topology of the synchronization network, and the number of external clocks enabled by the synchronization network; and
performing (120) clock configuration for the synchronization network according to the determined information,
wherein:
if the synchronization network comprises two interconnected rings, and in each of the rings, a node other than a node for interconnecting the two rings has external clock injection, configuring the synchronization network comprises: performing the clock configuration for the two rings in a shortest-path manner by:
for each interconnection node of the two rings, determining a shortest path from the interconnection node to a node having external clock injection in the two rings, configuring for the interconnection node a plurality of chains for extracting clocks from adjacent nodes of the interconnection node, and configuring an extracted clock of one of the chains located on the shortest path as the operation clock;
for each non-interconnection node of the two rings, determining a shortest path from the non-interconnection node to a node having external clock injection in the same ring, configuring for the non-interconnection node two chains for extracting clocks from adjacent nodes at both sides of the non-interconnection node, and configuring an extracted clock of one of the chains located on the shortest path as the operation clock; and
for each node having external clock injection in the two rings, configuring an extracted clock and configuring two chains for extracting clocks from adjacent nodes at both sides of the node having external clock injection.

12. A configuration method for a synchronization network, comprising:
determining (110) at least the following information: topology of the synchronization network, and the number of external clocks enabled by the synchronization network; and
performing (120) clock configuration for the synchronization network according to the determined information,
wherein:
if the synchronization network comprises a chain having external clocks injected at a single point, configuring the synchronization network comprises: performing the clock configuration for the chain by:
for a node having external clock injection in the chain, configuring an extracted external clock; and
for each node having no external clock injection in the chain, configuring one chain for extracting a clock from an adjacent node at one side of the node having no external clock injection which is closest to a node having clock injection in the ring.

13. A configuration apparatus for a synchronization network, comprising:
an information acquisition module (10) configured to determine at least the following information: topology of the synchronization network and the number of external clocks enabled by the synchronization network; and
a clock configuration module (20) configured to perform clock configuration for the synchronization network according to the determined information,
wherein:
if the synchronization network comprises a ring having an external clock injected at a single point, the clock configuration module (20) is configured to perform clock configuration for the ring in a ring manner, and comprises:
a first configuration unit configured to, for a node having external clock injection in the ring, configure an extracted external clock; and
a second configuration unit configured to, for each node having no external clock injection in the ring, configure two chains for extracting clocks from adjacent nodes at both sides of the node having no external clock injection, and configure an extracted clock in an extraction direction being the same as a preset extraction direction of an operation clock of the ring, as an operation clock, the extraction direction of an operation clock of the ring being clockwise or counter clockwise;
the ring is a single ring; or
the ring is interconnected at least with another ring, and a non-interconnection node in the ring has external clock injection; or
the ring is interconnected with at least another ring, other nodes than a node for interconnecting with the node in the another ring has external clock injection, and the clock configuration module regards each interconnection node of the ring and the another ring as a node having external clock injection in the ring and performs the clock configuration for the ring.

14. A configuration apparatus for a synchronization network, comprising:
an information acquisition module (10) configured to determine at least the following information: topology of the synchronization network and the number of external clocks enabled by the synchronization network; and
a clock configuration module (20) configured to perform clock configuration for the synchronization network according to the determined information,
wherein:
if the synchronization network comprises a ring having external clocks injected at double points, the clock configuration module (20) is configured to perform the clock configuration for the ring in a ring manner, and comprises:
a first configuration unit configured to, for each node having no external clock injection in the ring, configure two chains for extracting clocks from adjacent nodes at both sides of the node having no external clock injection, and configure an extracted clock in an extraction direction being the same as a preset extraction direction of an operation clock of the ring, as an operation clock, the extraction direction of an operation clock of the ring being clockwise or counter clockwise; and
a second configuration unit configured to configure one of two nodes having external clock injection in the ring as a main operation node, and another of the two nodes as a standby operation node; for the main operation node, configure an extracted external clock and configure one chain for extracting a clock from an adjacent node at one side of the main operation node in an extraction direction being opposite to the extraction direction of the operation clock of the ring; and for the standby operation node, configure an extracted external clock and configure one chain for extracting a clock from an adjacent node at one side of the standby operation node in an extraction direction being the same as the extraction direction of the operation clock of the ring, and configure the extracted clock of the chain as the operation clock;
the ring is a single ring; or
the ring is interconnected at least with another ring, and two non-interconnection nodes in the ring have external clock injection; or
the ring is interconnected with at least another ring, other nodes than an interconnection node in the two rings have external clock injection, the clock configuration module regards all interconnection nodes of the ring and the another ring as one node having external clock injection in the ring, and performs clock configuration for the ring; and the node being regarded as having external clock injection has different operation states in the two rings to which the node belongs; or
the ring is interconnected with at least another two rings, each node other than a node interconnected with the ring in the another two rings has external clock injection, the clock configuration module regards all nodes interconnected with each of the another two rings in the ring as one node having external clock injection in the ring, and performs clock configuration for the ring; and the one node being regarded as having external clock injection has different operation states in the two rings to which the node belongs.

15. The configuration apparatus according to claim 14, wherein:
if two interconnection nodes are regarded as one node, the clock configuration module further comprises:
a third configuration unit configured to determine the operations state of the two interconnection nodes as standby main rings; configure two chains of extracted clocks in two directions between the two interconnection nodes, or configure one chain in an extraction direction being the same as the extraction direction of an operation clock of the main ring, and configure the extracted clock in an extraction direction being the same as the extraction direction of an operation clock of the main ring as the operation clock.

16. A configuration apparatus for a synchronization network, comprising:
an information acquisition module (10) configured to determine at least the following information: topology of the synchronization network and the number of external clocks enabled by the synchronization network; and
a clock configuration module (20) configured to perform clock configuration for the synchronization network according to the determined information,
wherein:
if the synchronization network comprises a ring having an external clock injected at a single point, the clock configuration module (20) is configured to perform the clock configuration for the ring in a shortest-path manner, and comprises:
a first configuration unit configured to, for a node having external clock injection in the ring, configure an extracted external clock; and
a second configuration unit configured to, for each node having no external clock injection in the ring, determine a shortest path from the node having no external clock injection to a node having external clock injection, configure for the node having no external clock injection two chains for extracting clocks from adjacent nodes at both sides of the node having no external clock injection, and configuring an extracted clock of one of the chains located on the shortest path as the operation clock;
the ring is a single ring; or
the ring is interconnected at least with another ring, and a non-interconnection node in the ring has external clock injection; or
the ring is interconnected with at least another ring at a single point, other nodes than the node for interconnecting with the ring in the another ring has external clock injection, and the interconnection node is a node having external clock injection in the ring.

17. A configuration apparatus for a synchronization network, comprising:
an information acquisition module (10) configured to determine at least the following information: topology of the synchronization network and the number of external clocks enabled by the synchronization network; and
a clock configuration module (20) configured to perform clock configuration for the synchronization network according to the determined information,
wherein:
if the synchronization network comprises a ring having external clocks injected at double points, the clock configuration module (20) is configured to perform the clock configuration for the ring in a shortest-path manner, and comprises:
a first configuration unit configured to, for each node having external clock injection in the ring, configure an extracted external clock and configure at least one chain for extracting a clock from an adjacent node at one side of the node having no external clock injection; and
a second configuration unit configured to, for each node having no external clock injection in the ring, determine a shortest path from the node having no external clock injection to a node having external clock injection, configure for the node having no external clock injection two chains for extracting clocks from adjacent nodes at both sides of the node having no external clock injection, and configure an extracted clock of a chain located on the shortest path as the operation clock;
the first configuration unit configuring, for each node having external clock injection in the ring, at least one chain for extracting a clock from an adjacent node at one side of the node having external clock injection comprises: if a common adjacent node exists between the two nodes having external clock injection, for each of the two nodes having external clock injection, configuring only one chain for extracting an external clock from a non-common adjacent node;
the ring is a single ring; or
the ring is interconnected with at least another ring at double points, other nodes than the node for interconnecting with the ring in the another ring has external clock injection, and the two nodes for interconnecting the ring and the another ring are two nodes having external clock injection in the ring.

18. A configuration apparatus for a synchronization network, comprising:
an information acquisition module (10) configured to determine at least the following information: topology of the synchronization network and the number of external clocks enabled by the synchronization network; and
a clock configuration module (20) configured to perform clock configuration for the synchronization network according to the determined information,
wherein:
if the synchronization network comprises two interconnected rings, and in each of the rings, a node other than a node for interconnecting the two rings has external clock injection, the clock configuration module (20) is configured to perform the clock configuration for the two rings in a shortest-path manner, and comprises:
a first configuration unit configured to, for each interconnection node of the two rings, determine a shortest path from the interconnection node of the two rings to a node having external clock injection in the two rings, configure for the interconnection node of the two rings a plurality of chains for extracting clocks from adjacent nodes of the interconnection node of the two rings, and configure an extracted clock of one of the chains located on the shortest path as the operation clock;
a second configuration unit configured to, for each non-interconnection node of the two rings, determine a shortest path from the non-interconnection node of the two rings to a node having external clock injection in the same ring, configure for the non-interconnection node of the two rings two chains for extracting clocks from adjacent nodes at both sides of the non-interconnection node of the two rings, and configure an extracted clock of one of the chains located on the shortest path as the operation clock; and
a third configuration unit configured to, for each node having external clock injection in the two rings, configure an extracted clock and configure two chains for extracting clocks from adjacent nodes at both sides of the node having external clock injection in the two rings.

19. A configuration apparatus for a synchronization network, comprising:
an information acquisition module (10) configured to determine at least the following information: topology of the synchronization network and the number of external clocks enabled by the synchronization network; and
a clock configuration module (20) configured to perform clock configuration for the synchronization network according to the determined information,
wherein:
if the synchronization network comprises a chain having external clocks injected at a single point, the clock configuration module is configured to perform the clock configuration for the chain, and comprises:
a first configuration unit configured to, for a node having external clock injection in the chain, configure an extracted external clock; and
a second configuration unit configured to, for each node having no external clock injection in the chain, configure one chain for extracting a clock from an adjacent node at one side of the having no external clock injection which is closest to a node having clock injection in the ring.

20. A computer readable storage medium, storing program instructions which, if being executed by a processer, implement the configuration method for a synchronization network according to any one of claims 1-12.

## Patentansprüche

1. Konfigurationsverfahren für ein Synchronisationsnetzwerk, das Folgendes umfasst:
Bestimmen (110) mindestens der folgenden Informationen: Topologie des Synchronisationsnetzwerks und die Anzahl der durch das Synchronisationsnetzwerk aktivierten externen Takte; und
Durchführen (120) einer Taktkonfiguration für das Synchronisationsnetzwerk gemäß den ermittelten Informationen,
wobei:
wenn das Synchronisationsnetzwerk einen Ring mit einem externen Takt umfasst, der an einem einzelnen Punkt eingespeist wird, das Konfigurieren des Synchronisationsnetzwerks umfasst:
Durchführen der Taktkonfiguration für den Ring auf eine Ringweise durch:
für einen Knoten mit externer Takteinspeisung in dem Ring, Konfigurieren eines extrahierten externen Takts; und
für jeden Knoten, der keine externe Takteinspeisung in dem Ring aufweist, Konfigurieren von zwei Punkt-zu-Punkt-Routen zum Extrahieren von Takten von benachbarten Knoten zu beiden Seiten des Knotens, und Konfigurieren eines extrahierten Takts in einer Extraktionsrichtung, die die gleiche Richtung wie eine voreingestellte Extraktionsrichtung eines Betriebstakts des Rings ist, als Betriebstakt, wobei die Extraktionsrichtung des Betriebstakts des Rings im oder gegen den Uhrzeigersinn läuft.

2. Konfigurationsverfahren nach Anspruch 1, wobei:
der Ring ein einzelner Ring ist; oder
der Ring mit zumindest einem anderen Ring zusammengeschaltet ist und ein Nicht-Zusammenschaltungsknoten in dem Ring eine externe Takteinspeisung aufweist; oder
der Ring mit mindestens einem anderen Ring zusammengeschaltet ist, andere Knoten als ein Knoten zur Zusammenschaltung mit dem Ring in dem anderen Ring eine externe Takteinspeisung aufweisen und Zusammenschaltungsknoten des Rings und des anderen Rings als Knoten mit externer Takteinspeisung in den jeweiligen Ringen betrachtet werden.

3. Konfigurationsverfahren für ein Synchronisationsnetzwerk, das Folgendes umfasst:
Bestimmen (110) mindestens der folgenden Informationen: Topologie des Synchronisationsnetzwerks und die Anzahl der durch das Synchronisationsnetzwerk aktivierten externen Takte; und
Durchführen (120) einer Taktkonfiguration für das Synchronisationsnetzwerk gemäß den ermittelten Informationen,
wobei:
wenn das Synchronisationsnetzwerk einen Ring mit externen Takteinspeisungen umfasst, die an zwei Punkten eingespeist werden, das Konfigurieren des Synchronisationsnetzwerks umfasst: Durchführen der Taktkonfiguration für den Ring auf eine Ringweise indem:
für jeden Knoten, der keine externe Takteinspeisung in dem Ring aufweist, Konfigurieren von zwei Punkt-zu-Punkt-Routen zum Extrahieren von Takten von benachbarten Knoten zu beiden Seiten des Knotens, und Konfigurieren eines extrahierten Takts in einer Extraktionsrichtung, die die gleiche Richtung wie eine voreingestellte Extraktionsrichtung eines Betriebstakts des Rings ist, als Betriebstakt, wobei die Extraktionsrichtung des Betriebstakts des Rings im oder gegen den Uhrzeigersinn läuft; und
Konfigurieren eines von zwei Knoten mit externer Takteinspeisung in dem Ring als Hauptbetriebsknoten und eines anderen der beiden Knoten als Standby-Betriebsknoten; für den Hauptbetriebsknoten, Konfigurieren eines extrahierten externen Takts und Konfigurieren einer Punkt-zu-Punkt-Route zum Extrahieren eines Takts von einem benachbarten Knoten an einer Seite des Hauptbetriebsknotens in einer Extraktionsrichtung, die der Extraktionsrichtung des Betriebstakts des Rings entgegengesetzt ist und für den Standby-Betriebsknoten, Konfigurieren eines extrahierten externen Takts und Konfigurieren einer Punkt-zu-Punkt-Route zum Extrahieren eines Takts von einem benachbarten Knoten auf einer Seite des Standby-Betriebsknotens in einer Extraktionsrichtung, die die gleiche Richtung wie die Extraktionsrichtung des Betriebstakts des Rings ist, und Konfigurieren des extrahierten Takts der Punkt-zu-Punkt-Route als Betriebstakt.

4. Konfigurationsverfahren nach Anspruch 3, wobei:
der Ring ein einzelner Ring ist; oder
der Ring mit mindestens einem anderen Ring zusammengeschaltet ist und zwei Nicht- Zusammenschaltungsknoten in dem Ring eine externe Takteinspeisung aufweisen; oder
der Ring mit mindestens einem anderen Ring zusammengeschaltet ist, andere Knoten als ein Zusammenschaltungsknoten in den beiden Ringen externe Takteinspeisung aufweisen und Zusammenschaltungsknoten des Rings und des anderen Rings als ein Knoten mit externer Takteinspeisung in den jeweiligen Ringen betrachtet werden, der Ring mit Taktkonfiguration ausgeführt wird und der eine Knoten, der als Knoten mit externer Takteinspeisung betrachtet wird, unterschiedliche Betriebszustände in den beiden Ringen aufweist, zu denen der Knoten gehört; oder
der Ring mit mindestens zwei weiteren Ringen zusammengeschaltet ist, jeder andere Knoten als ein mit dem Ring zusammengeschalteter Knoten in den beiden weiteren Ringen eine externe Takteinspeisung aufweist, alle mit jedem der beiden weiteren Ringe in dem Ring zusammengeschalteten Knoten als ein Knoten mit externer Takteinspeisung in dem Ring betrachtet werden, der Ring mit einer Taktkonfiguration ausgeführt wird; und der eine Knoten, der als mit externer Takteinspeisung betrachtet wird, unterschiedliche Betriebszustände in den beiden Ringen aufweist, zu denen der Knoten gehört.

5. Konfigurationsverfahren nach Anspruch 4, wobei:
wenn zwei Zusammenschaltungsknoten als ein Knoten betrachtet werden, das Verfahren ferner umfasst:
Bestimmen der Betriebszustände der beiden Zusammenschaltungsknoten als Standby-Hauptringe;
Konfigurieren von zwei Punkt-zu-Punkt-Routen von extrahierten Takten in zwei Richtungen zwischen den beiden Zusammenschaltungsknoten oder Konfigurieren einer Punkt-zu-Punkt-Route in einer Extraktionsrichtung, die die gleiche Richtung wie die Extraktionsrichtung eines Betriebstakts des Hauptrings ist, und Konfigurieren des extrahierten Takts in einer Extraktionsrichtung, die die gleiche Richtung wie die Extraktionsrichtung des Betriebstakts des Hauptrings ist, als Betriebstakt.

6. Konfigurationsverfahren für ein Synchronisationsnetzwerk, das Folgendes umfasst:
Bestimmen (110) mindestens der folgenden Informationen: Topologie des Synchronisationsnetzwerks und die Anzahl der durch das Synchronisationsnetzwerk aktivierten externen Takte; und
Durchführen (120) einer Taktkonfiguration für das Synchronisationsnetzwerk gemäß den ermittelten Informationen,
wobei
wenn das Synchronisationsnetzwerk einen Ring mit einem externen Takt umfasst, der an einem einzigen Punkt eingespeist wird, das Konfigurieren des Synchronisationsnetzwerks umfasst: Durchführen der Taktkonfiguration für den Ring auf dem kürzesten Weg, indem:
für einen Knoten mit externer Takteinspeisung in dem Ring, Konfigurieren eines extrahierten externen Takts; und
für jeden Knoten, der keine externe Takteinspeisung in dem Ring aufweist, Bestimmen eines kürzesten Pfades von dem Knoten, der keine externe Takteinspeisung hat, zu einem Knoten, der eine externe Takteinspeisung hat, Konfigurieren von zwei Punkt-zu-Punkt-Routen für den Knoten, der keine externe Takteinspeisung aufweist, zum Extrahieren von Takten von benachbarten Knoten zu beiden Seiten des Knotens, der keine externe Takteinspeisung hat, und Konfigurieren eines extrahierten Taktes von einer der Punkt-zu-Punkt-Routen, die sich auf dem kürzesten Pfad befindet, als Betriebstakt.

7. Konfigurationsverfahren nach Anspruch 6, wobei:
der Ring ein einzelner Ring ist; oder
der Ring mit zumindest einem anderen Ring zusammengeschaltet ist und ein Nicht- Zusammenschaltungsknoten in dem Ring eine externe Takteinspeisung aufweist; oder
der Ring mit mindestens einem anderen Ring an einem einzigen Punkt zusammengeschaltet ist, andere Knoten als der Knoten zum Zusammenschalten mit dem Ring in dem anderen Ring eine externe Takteinspeisung aufweisen und der Zusammenschaltungsknoten ein Knoten mit externer Takteinspeisung in dem Ring ist.

8. Konfigurationsverfahren für ein Synchronisationsnetzwerk, das Folgendes umfasst:
Bestimmen (110) mindestens der folgenden Informationen: Topologie des Synchronisationsnetzwerks und die Anzahl der durch das Synchronisationsnetzwerk aktivierten externen Takte; und
Durchführen (120) einer Taktkonfiguration für das Synchronisationsnetzwerk gemäß den ermittelten Informationen,
wobei:
wenn das Synchronisationsnetzwerk einen Ring mit externen Takten umfasst, die an zwei Punkten eingespeist werden, das Konfigurieren des Synchronisationsnetzwerks umfasst: Durchführen der Taktkonfiguration für den Ring auf dem kürzesten Weg, indem:
für jeden Knoten mit externer Takteinspeisung in dem Ring, Konfigurieren eines extrahierten externen Taktes und Konfigurieren mindestens einer Punkt-zu-Punkt-Route zum Extrahieren eines Taktes von einem benachbarten Knoten zu einer Seite des Knotens mit externer Takteinspeisung; und
für jeden Knoten, der keine externe Takteinspeisung in dem Ring aufweist, Bestimmen eines kürzesten Pfades von dem Knoten mit keiner externen Takteinspeisung zu einem Knoten mit externer Takteinspeisung, Konfigurieren von zwei Punkt-zu-Punkt-Routen für den Knoten mit keiner externen Takteinspeisung zum Extrahieren von Takten von benachbarten Knoten zu beiden Seiten des Knotens mit keiner externen Takteinspeisung und Konfigurieren eines extrahierten Taktes von einer der Punkt-zu-Punkt-Routen, die sich auf dem kürzesten Pfad befindet, als Betriebstakt.

9. Konfigurationsverfahren nach Anspruch 8, wobei:
für jeden Knoten mit externer Takteinspeisung in dem Ring das Konfigurieren mindestens einer Punkt-zu-Punkt-Route zum Extrahieren eines Taktes von einem benachbarten Knoten zu einer Seite des Knotens mit externer Takteinspeisung umfasst:
wenn ein gemeinsamer benachbarter Knoten zwischen zwei Knoten mit externer Takteinspeisung existiert, für jeden der beiden Knoten nur eine Punkt-zu-Punkt-Route zum Extrahieren eines externen Takts von einem nicht gemeinsamen benachbarten Knoten für den Knoten mit externer Takteinspeisung konfiguriert wird.

10. Konfigurationsverfahren nach Anspruch 8 oder 9, wobei:
der Ring ein einzelner Ring ist; oder
der Ring mit mindestens einem anderen Ring an zwei Punkten zusammengeschaltet ist, andere Knoten als der Knoten zur Zusammenschaltung mit dem Ring in dem anderen Ring eine externe Takteinspeisung aufweisen und die beiden Knoten zur Zusammenschaltung des Rings und des anderen Rings zwei Knoten mit externer Takteinspeisung in dem Ring sind.

11. Konfigurationsverfahren für ein Synchronisationsnetzwerk, das Folgendes umfasst:
Bestimmen (110) mindestens der folgenden Informationen: Topologie des Synchronisationsnetzwerks und die Anzahl der durch das Synchronisationsnetzwerk aktivierten externen Takte; und
Durchführen (120) einer Taktkonfiguration für das Synchronisationsnetzwerk gemäß den ermittelten Informationen,
wobei:
wenn das Synchronisationsnetzwerk zwei zusammengeschaltete Ringe umfasst und in jedem der Ringe ein anderer Knoten als ein Knoten zum Zusammenschalten der beiden Ringe eine externe Takteinspeisung aufweist, das Konfigurieren des Synchronisationsnetzwerks umfasst: Durchführen der Taktkonfiguration für die beiden Ringe auf dem kürzesten Weg indem:
für jeden Zusammenschaltungsknoten der beiden Ringe, Bestimmen eines kürzesten Weges von dem Zusammenschaltungsknoten zu einem Knoten mit externer Takteinspeisung in den beiden Ringen, Konfigurieren einer Vielzahl von Punkt-zu-Punkt-Routen für den Zusammenschaltungsknoten zum Extrahieren von Takten aus benachbarten Knoten des Zusammenschaltungsknoten und Konfigurieren eines extrahierten Taktes einer der Punkt-zu-Punkt-Route, die sich auf dem kürzesten Weg befindet, als Betriebstakt;
für jeden Nicht- Zusammenschaltungsknoten der beiden Ringe, Bestimmen eines kürzesten Pfades von dem Nicht- Zusammenschaltungsknoten zu einem Knoten mit externer Takteinspeisung in demselben Ring, Konfigurieren von zwei Punkt-zu-Punkt-Routen für den Nicht- Zusammenschaltungsknoten zum Extrahieren von Takten aus benachbarten Knoten zu beiden Seiten des Nicht-Zusammenschaltungsknotens und Konfigurieren eines extrahierten Taktes einer der Punkt-zu-Punkt-Routen, die sich auf dem kürzesten Pfad befindet, als Betriebstakt; und
für jeden Knoten mit externer Takteinspeisung in den zwei Ringen, Konfigurieren eines extrahierten Takts und Konfigurieren von zwei Punkt-zu-Punkt-Routen zum Extrahieren von Takten aus benachbarten Knoten zu beiden Seiten des Knotens mit externer Takteinspeisung.

12. Konfigurationsverfahren für ein Synchronisationsnetzwerk, das Folgendes umfasst:
Bestimmen (110) mindestens der folgenden Informationen: Topologie des Synchronisationsnetzwerks und die Anzahl der durch das Synchronisationsnetzwerk aktivierten externen Takte; und
Durchführen (120) einer Taktkonfiguration für das Synchronisationsnetzwerk gemäß den ermittelten Informationen,
wobei:
wenn das Synchronisationsnetzwerk eine Punkt-zu-Punkt-Route mit externen Takteinspeisungen umfasst, die an einem einzigen Punkt eingespeist werden, das Konfigurieren des Synchronisationsnetzwerks umfasst: Durchführen der Taktkonfiguration für die Punkt-zu-Punkt-Route indem:
für einen Knoten mit externer Takteinspeisung in der Punkt-zu-Punkt-Route, Konfigurieren eines extrahierten externen Takts; und
für jeden Knoten, der keine externe Takteinspeisung in der Punkt-zu-Punkt-Route aufweist, Konfigurieren einer Punkt-zu-Punkt-Route zum Extrahieren eines Taktes von einem benachbarten Knoten zu einer Seite des Knotens, der keine externe Takteinspeisung aufweist und der einem Knoten mit Takteinspeisung in dem Ring am nächsten ist.

13. Konfigurationsvorrichtung für ein Synchronisationsnetzwerk, die Folgendes umfasst:
ein Informationserfassungsmodul (10), das so konfiguriert ist, dass es mindestens die folgenden Informationen bestimmt: die Topologie des Synchronisationsnetzwerks und die Anzahl der durch das Synchronisationsnetzwerk aktivierten externen Takte; und
ein Taktkonfigurationsmodul (20), das so konfiguriert ist, dass es eine Taktkonfiguration für das Synchronisationsnetzwerk gemäß den bestimmten Informationen durchführt,
wobei:
wenn das Synchronisationsnetzwerk einen Ring mit einem externen Takt umfasst, der an einem einzigen Punkt eingespeist wird, das Taktkonfigurationsmodul (20) so konfiguriert ist, dass es eine Taktkonfiguration für den Ring in einer Ringweise durchführt, und umfasst:
eine erste Konfigurationseinheit, die so konfiguriert ist, dass sie für einen Knoten mit externer Takteinspeisung in dem Ring einen extrahierten externen Takt konfiguriert; und
eine zweite Konfigurationseinheit, die so konfiguriert ist, dass sie für jeden Knoten, der keine externe Takteinspeisung in dem Ring aufweist, zwei Punkt-zu-Punkt-Routen zum Extrahieren von Takten aus benachbarten Knoten zu beiden Seiten des Knotens, der keine externe Takteinspeisung aufweist, konfiguriert und einen extrahierten Takt in einer Extraktionsrichtung, die die gleiche Richtung wie eine voreingestellte Extraktionsrichtung eines Betriebstakts des Rings ist, als Betriebstakt konfiguriert, wobei die Extraktionsrichtung eines Betriebstakts des Rings im oder gegen den Uhrzeigersinn läuft;
der Ring ein einzelner Ring ist; oder
der Ring mit zumindest einem anderen Ring zusammengeschaltet ist, und ein Nicht- Zusammenschaltungsknoten in dem Ring eine externe Takteinspeisung aufweist; oder
der Ring mit mindestens einem anderen Ring zusammengeschaltet ist, andere Knoten als ein zum Zusammenschalten mit dem Knoten in dem anderen Ring dienender Knoten eine externe Takteinspeisung aufweisen und das Taktkonfigurationsmodul jeden Zusammenschaltungsknoten des Rings und des anderen Rings als einen Knoten mit externer Takteinspeisung in dem Ring betrachtet und die Taktkonfiguration für den Ring durchführt.

14. Konfigurationsvorrichtung für ein Synchronisationsnetzwerk, die Folgendes umfasst:
ein Informationserfassungsmodul (10), das so konfiguriert ist, dass es mindestens die folgenden Informationen bestimmt: die Topologie des Synchronisationsnetzwerks und die Anzahl der durch das Synchronisationsnetzwerk aktivierten externen Takte; und
ein Taktkonfigurationsmodul (20), das so konfiguriert ist, dass es eine Taktkonfiguration für das Synchronisationsnetzwerk gemäß den bestimmten Informationen durchführt,
wobei:
wenn das Synchronisationsnetzwerk einen Ring mit externen Takteinspeisungen umfasst, die an zwei Punkten eingespeist werden, das Taktkonfigurationsmodul (20) konfiguriert ist, um die Taktkonfiguration für den Ring in einer Ringweise durchzuführen, und umfasst:
eine erste Konfigurationseinheit, die so konfiguriert ist, dass sie für jeden Knoten ohne externe Takteinspeisung in dem Ring zwei Punkt-zu-Punkt-Routen zum Extrahieren von Takten aus benachbarten Knoten zu beiden Seiten des Knotens ohne externe Takteinspeisung konfiguriert und einen extrahierten Takt in einer Extraktionsrichtung, die die dieselbe Richtung wie eine voreingestellte Extraktionsrichtung eines Betriebstakts des Rings ist, als Betriebstakt konfiguriert, wobei die Extraktionsrichtung eines Betriebstakts des Rings im oder gegen den Uhrzeigersinn läuft; und
eine zweite Konfigurationseinheit, die so konfiguriert ist, dass sie einen von zwei Knoten mit externer Takteinspeisung in dem Ring als Hauptbetriebsknoten und einen anderen der beiden Knoten als Standby-Betriebsknoten konfiguriert; für den Hauptbetriebsknoten einen extrahierten externen Takt konfiguriert und eine Punkt-zu-Punkt-Route zum Extrahieren eines Takts von einem benachbarten Knoten zu einer Seite des Hauptbetriebsknotens in einer Extraktionsrichtung konfiguriert, die der Extraktionsrichtung des Betriebstakts des Rings entgegengesetzt ist; und für den Standby-Betriebsknoten einen extrahierten externen Takt konfigurieren und eine Punkt-zu-Punkt-Route konfigurieren, um einen Takt von einem benachbarten Knoten zu einer Seite des Standby-Betriebsknotens in einer Extraktionsrichtung zu extrahieren, die die gleiche Richtung wie die Extraktionsrichtung des Betriebstakts des Rings ist, und den extrahierten Takt der Punkt-zu-Punkt-Route als Betriebstakt konfigurieren;
der Ring ein einzelner Ring ist; oder
der Ring mit mindestens einem anderen Ring zusammengeschaltet ist, und zwei Nicht- Zusammenschaltungsknoten in dem Ring eine externe Takteinspeisung aufweisen; oder
der Ring mit mindestens einem anderen Ring zusammengeschaltet ist, andere Knoten als ein zusammengeschalteter Knoten in den beiden Ringen externe Takteinspeisung aufweisen, das Taktkonfigurationsmodul alle Zusammenschaltungsknoten des Rings und des anderen Rings als einen Knoten mit externer Takteinspeisung in dem Ring betrachtet und führt die Taktkonfiguration für den Ring durch; und der Knoten, der als Knoten mit externer Takteinspeisung betrachtet wird, unterschiedliche Betriebszustände in den beiden Ringen aufweist, zu denen der Knoten gehört; oder
der Ring mit mindestens zwei weiteren Ringen zusammengeschaltet ist, jeder andere Knoten als ein mit dem Ring zusammengeschalteter Knoten in den beiden weiteren Ringen eine externe Takteinspeisung aufweist, das Taktkonfigurationsmodul alle mit jedem der beiden weiteren Ringe in dem Ring zusammengeschalteten Knoten als einen Knoten mit externer Takteinspeisung in dem Ring betrachtet und eine Taktkonfiguration für den Ring durchführt und der eine Knoten, der als mit externer Takteinspeisung betrachtet wird, unterschiedliche Betriebszustände in den beiden Ringen aufweist, zu denen der Knoten gehört.

15. Konfigurationsvorrichtung nach Anspruch 14, wobei:
wenn zwei Zusammenschaltungsknoten als ein Knoten betrachtet werden, das Taktkonfigurationsmodul ferner umfasst:
eine dritte Konfigurationseinheit, die so konfiguriert ist, dass sie den Betriebszustand der beiden Zusammenschaltungsknoten als Standby-Hauptringe bestimmt; zwei Punkt-zu-Punkt-Routen von extrahierten Takten in zwei Richtungen zwischen den beiden Zusammenschaltungsknoten konfiguriert oder eine Punkt-zu-Punkt-Route in einer Extraktionsrichtung konfiguriert, die mit der Extraktionsrichtung eines Betriebstakts des Hauptrings übereinstimmt, und den extrahierten Takt in einer Extraktionsrichtung, die mit der Extraktionsrichtung eines Betriebstakts des Hauptrings übereinstimmt, als Betriebstakt konfiguriert.

16. Konfigurationsvorrichtung für ein Synchronisationsnetzwerk, die Folgendes umfasst:
ein Informationserfassungsmodul (10), das so konfiguriert ist, dass es mindestens die folgenden Informationen bestimmt: die Topologie des Synchronisationsnetzwerks und die Anzahl der durch das Synchronisationsnetzwerk aktivierten externen Takte; und
ein Taktkonfigurationsmodul (20), das so konfiguriert ist, dass es eine Taktkonfiguration für das Synchronisationsnetzwerk gemäß den ermittelten Informationen durchführt,
wobei:
wenn das Synchronisationsnetzwerk einen Ring mit einem externen Takt umfasst, der an einem einzelnen Punkt eingespeist wird, das Taktkonfigurationsmodul (20) so konfiguriert ist, dass es die Taktkonfiguration für den Ring auf dem kürzesten Weg durchführt, und umfasst:
eine erste Konfigurationseinheit, die so konfiguriert ist, dass sie für einen Knoten mit externer Takteinspeisung in dem Ring einen extrahierten externen Takt konfiguriert; und
eine zweite Konfigurationseinheit, die so konfiguriert ist, dass sie für jeden Knoten ohne externe Takteinspeisung in dem Ring einen kürzesten Pfad von dem Knoten ohne externe Takteinspeisung zu einem Knoten mit externer Takteinspeisung bestimmt, für den Knoten ohne externe Takteinspeisung zwei Punkt-zu-Punkt-Routen zum Extrahieren von Takten aus benachbarten Knoten zu beiden Seiten des Knotens ohne externe Takteinspeisung konfiguriert und einen extrahierten Takt einer der Punkt-zu-Punkt-Routen, die sich auf dem kürzesten Pfad befindet, als Betriebstakt konfiguriert;
der Ring ein einzelner Ring ist; oder
der Ring mit zumindest einem anderen Ring zusammengeschaltet ist, und ein Nicht-Zusammenschaltungsknoten in dem Ring eine externe Takteinspeisung aufweist; oder
der Ring mit mindestens einem anderen Ring an einem einzigen Punkt zusammengeschaltet ist, andere Knoten als der Knoten für die Zusammenschaltung mit dem Ring in dem anderen Ring externe Takteinspeisung aufweisen, und der Zusammenschaltungsknoten ein Knoten mit externer Takteinspeisung in dem Ring ist.

17. Konfigurationsvorrichtung für ein Synchronisationsnetzwerk, die Folgendes umfasst:
ein Informationserfassungsmodul (10), das so konfiguriert ist, dass es mindestens die folgenden Informationen bestimmt: die Topologie des Synchronisationsnetzwerks und die Anzahl der durch das Synchronisationsnetzwerk aktivierten externen Takte; und
ein Taktkonfigurationsmodul (20), das so konfiguriert ist, dass es eine Taktkonfiguration für das Synchronisationsnetzwerk gemäß den ermittelten Informationen durchführt,
wobei:
wenn das Synchronisationsnetzwerk einen Ring mit externer Takteinspeisung umfasst, die an einem einzelnen Punkt eingespeist wird, das Taktkonfigurationsmodul (20) so konfiguriert ist, dass es die Taktkonfiguration für den Ring auf dem kürzesten Weg durchführt, und Folgendes umfasst:
eine erste Konfigurationseinheit, die so konfiguriert ist, dass sie für jeden Knoten mit externer Takteinspeisung in dem Ring einen extrahierten externen Takt konfiguriert und mindestens eine Punkt-zu-Punkt-Route zum Extrahieren eines Takts von einem benachbarten Knoten zu einer Seite des Knotens ohne externe Takteinspeisung konfiguriert; und
eine zweite Konfigurationseinheit, die so konfiguriert ist, dass sie für jeden Knoten ohne externe Takteinspeisung in dem Ring einen kürzesten Pfad von dem Knoten ohne externe Takteinspeisung zu einem Knoten mit externer Takteinspeisung bestimmt, für den Knoten ohne externe Takteinspeisung zwei Punkt-zu-Punkt-Routen zum Extrahieren von Takten aus benachbarten Knoten zu beiden Seiten des Knotens ohne externe Takteinspeisung konfiguriert und einen extrahierten Takt einer Punkt-zu-Punkt-Route , die sich auf dem kürzesten Pfad befindet, als Betriebstakt konfiguriert;
die erste Konfigurationseinheit, die für jeden Knoten mit externer Takteinspeisung in dem Ring mindestens eine Punkt-zu-Punkt-Route zum Extrahieren eines Takts von einem benachbarten Knoten zu einer Seite des Knotens mit externer Takteinspeisung konfiguriert, umfasst: wenn ein gemeinsamer benachbarter Knoten zwischen den beiden Knoten mit externer Takteinspeisung existiert, für jeden der beiden Knoten mit externer Takteinspeisung, Konfigurieren nur einer Punkt-zu-Punkt-Route zum Extrahieren eines externen Takts von einem nicht gemeinsamen benachbarten Knoten;
der Ring ein einzelner Ring ist; oder
der Ring mit mindestens einem anderen Ring an zwei Punkten zusammengeschaltet ist, andere Knoten als der Knoten zur Zusammenschaltung mit dem Ring in dem anderen Ring haben eine externe Takteinspeisung, und die beiden Knoten zur Zusammenschaltung des Rings und des anderen Rings zwei Knoten mit externer Takteinspeisung in dem Ring sind.

18. Konfigurationsvorrichtung für ein Synchronisationsnetzwerk, die Folgendes umfasst:
ein Informationserfassungsmodul (10), das so konfiguriert ist, dass es mindestens die folgenden Informationen bestimmt: die Topologie des Synchronisationsnetzwerks und die Anzahl der durch das Synchronisationsnetzwerk aktivierten externen Takte; und
ein Taktkonfigurationsmodul (20), das so konfiguriert ist, dass es eine Taktkonfiguration für das Synchronisationsnetzwerk gemäß den bestimmten Informationen durchführt,
wobei:
wenn das Synchronisationsnetzwerk zwei zusammengeschaltete Ringe umfasst und in jedem der Ringe ein anderer Knoten als ein Knoten zum Zusammenschalten der beiden Ringe eine externe Takteinspeisung aufweist, das Taktkonfigurationsmodul (20) so konfiguriert ist, dass es die Taktkonfiguration für die beiden Ringe auf dem kürzesten Weg durchführt, und umfasst:
eine erste Konfigurationseinheit, die so konfiguriert ist, dass sie für jeden Zusammenschaltungsknoten der beiden Ringe einen kürzesten Weg von dem Zusammenschaltungsknoten der beiden Ringe zu einem Knoten mit externer Takteinspeisung in den beiden Ringen bestimmt, für den Zusammenschaltungsknoten der beiden Ringe eine Vielzahl von Punkt-zu-Punkt-Routen zum Extrahieren von Takten aus benachbarten Knoten des Zusammenschaltungsknotens der beiden Ringe konfiguriert und einen extrahierten Takt einer der Punkt-zu-Punkt-Routen , die sich auf dem kürzesten Weg befindet, als Betriebstakt konfiguriert;
eine zweite Konfigurationseinheit, die so konfiguriert ist, dass sie für jeden Nicht-Zusammenschaltungsknoten der beiden Ringe einen kürzesten Pfad von dem Nicht-Zusammenschaltungsknoten der beiden Ringe zu einem Knoten mit externer Takteinspeisung in demselben Ring bestimmt, für den Nicht-Zusammenschaltungsknoten der beiden Ringe zwei Punkt-zu-Punkt-Routen zum Extrahieren von Takten aus benachbarten Knoten zu beiden Seiten des Nicht-Zusammenschaltungsknotens der beiden Ringe konfiguriert und einen extrahierten Takt einer der Punkt-zu-Punkt-Routen , die sich auf dem kürzesten Pfad befindet, als Betriebstakt konfiguriert; und
eine dritte Konfigurationseinheit, die so konfiguriert ist, dass sie für jeden Knoten mit externer Takteinspeisung in den beiden Ringen einen extrahierten Takt konfiguriert und zwei Punkt-zu-Punkt-Routen zum Extrahieren von Takten aus benachbarten Knoten zu beiden Seiten des Knotens mit externer Takteinspeisung in den beiden Ringen konfiguriert.

19. Konfigurationsvorrichtung für ein Synchronisationsnetzwerk, die Folgendes umfasst:
ein Informationserfassungsmodul (10), das so konfiguriert ist, dass es mindestens die folgenden Informationen bestimmt: die Topologie des Synchronisationsnetzwerks und die Anzahl der durch das Synchronisationsnetzwerk aktivierten externen Takte; und
ein Taktkonfigurationsmodul (20), das so konfiguriert ist, dass es eine Taktkonfiguration für das Synchronisationsnetzwerk gemäß den bestimmten Informationen durchführt,
wobei:
wenn das Synchronisationsnetzwerk eine Punkt-zu-Punkt-Route mit externen Takteinspeisungen umfasst, die an einem einzigen Punkt eingespeist werden, das Taktkonfigurationsmodul so konfiguriert ist, dass es die Taktkonfiguration für die Punkt-zu-Punkt-Route durchführt, und umfasst:
eine erste Konfigurationseinheit, die so konfiguriert ist, dass sie für einen Knoten mit externer Takteinspeisung in der Punkt-zu-Punkt-Route einen extrahierten externen Takt konfiguriert; und
eine zweite Konfigurationseinheit, die so konfiguriert ist, dass sie für jeden Knoten, der keine externe Takteinspeisung in der Punkt-zu-Punkt-Route hat, eine Punkt-zu-Punkt-Route konfiguriert, um einen Takt von einem benachbarten Knoten zu einer Seite des Knotens, der keine externe Takteinspeisung hat und der einem Knoten mit Takteinspeisung in dem Ring am nächsten ist, zu extrahieren.

20. Computerlesbares Speichermedium, auf dem Programmbefehle gespeichert sind, die, wenn sie von einem Prozessor ausgeführt werden, das Konfigurationsverfahren für ein Synchronisationsnetzwerk nach einem der Ansprüche 1-12 implementieren.

## Revendications

1. Procédé de configuration d'un réseau de synchronisation, comprenant :
déterminer (110) au moins les informations suivantes : la topologie du réseau de synchronisation, et le nombre d'horloges externes activées par le réseau de synchronisation ; et
effectuer (120) une configuration d'horloge pour le réseau de synchronisation selon les informations déterminées,
dans lequel :
si le réseau de synchronisation comprend un anneau ayant une horloge externe intégrée en un seul point, la configuration du réseau de synchronisation comprend : exécuter la configuration d'horloge pour l'anneau de manière circulaire en :
pour un noeud ayant une injection d'horloge externe dans l'anneau, configurer une horloge externe extraite ; et
pour chaque noeud n'ayant pas d'injection d'horloge externe dans l'anneau, la configuration de deux routes point à point pour extraire des horloges de noeuds adjacents des deux côtés du noeud, et la configuration d'une horloge extraite dans une direction d'extraction qui est la même qu'une direction d'extraction prédéfinie d'une horloge de fonctionnement de l'anneau, en tant qu'horloge de fonctionnement, la direction d'extraction de l'horloge de fonctionnement de l'anneau étant dans le sens horaire ou antihoraire.

2. Procédé de configuration selon la revendication 1, dans lequel :
l'anneau est un anneau unique ; ou
l'anneau est interconnecté au moins avec un autre anneau, et un noeud de non-interconnexion dans l'anneau a une injection d'horloge externe ; ou
l'anneau est interconnecté avec au moins un autre anneau, d'autres noeuds qu'un noeud d'interconnexion avec l'anneau dans l'autre anneau ont une injection d'horloge externe, et les noeuds d'interconnexion de l'anneau et de l'autre anneau sont considérés comme des noeuds ayant une injection d'horloge externe dans les anneaux respectifs.

3. Procédé de configuration pour un réseau de synchronisation, comprenant :
déterminer (110) au moins les informations suivantes : la topologie du réseau de synchronisation, et le nombre d'horloges externes activées par le réseau de synchronisation ; et
effectuer (120) une configuration d'horloge pour le réseau de synchronisation selon les informations déterminées,
dans lequel :
si le réseau de synchronisation comprend un anneau ayant des horloges externes intégrées aux deux points, la configuration du réseau de synchronisation comprend : l'exécution de la configuration d'horloge pour l'anneau d'une manière circulaire en :
pour chaque noeud n'ayant pas d'injection d'horloge externe dans l'anneau, configurer deux routes point à point pour extraire des horloges de noeuds adjacents des deux côtés du noeud, et configurer une horloge extraite dans une direction d'extraction qui est la même qu'une direction d'extraction prédéfinie d'une horloge de fonctionnement de l'anneau, en tant qu'horloge de fonctionnement, la direction d'extraction de l'horloge de fonctionnement de l'anneau étant dans le sens horaire ou antihoraire ; et
configurer l'un des deux noeuds ayant une injection d'horloge externe dans l'anneau en tant que noeud de fonctionnement principal, et un autre des deux noeuds en tant que noeud de fonctionnement en attente ; pour le noeud de fonctionnement principal, configurer une horloge externe extraite et configurer une route point à point pour extraire une horloge d'un noeud adjacent d'un côté du noeud de fonctionnement principal dans une direction d'extraction qui est opposée à la direction d'extraction de l'horloge de fonctionnement de l'anneau ; et pour le noeud de fonctionnement en attente, configurer une horloge externe extraite et configurer une route point à point pour extraire une horloge d'un noeud adjacent d'un côté du noeud de fonctionnement en attente dans une direction d'extraction qui est la même que la direction d'extraction de l'horloge de fonctionnement de l'anneau, et configurer l'horloge extraite de la route point à point comme l'horloge de fonctionnement.

4. Procédé de configuration selon la revendication 3, dans lequel :
l'anneau est un anneau unique ; ou
l'anneau est interconnecté au moins avec un autre anneau, et deux noeuds de non-interconnexion dans l'anneau ont une injection d'horloge externe ; ou
l'anneau est interconnecté avec au moins un autre anneau, d'autres noeuds qu'un noeud d'interconnexion dans les deux anneaux ont une injection d'horloge externe, et les noeuds d'interconnexion de l'anneau et de l'autre anneau sont considérés comme un noeud ayant une injection d'horloge externe dans les anneaux respectifs, l'anneau est exécuté avec une configuration d'horloge ; et le noeud étant considéré comme ayant une injection d'horloge externe a différents états de fonctionnement dans les deux anneaux auxquels le noeud appartient ; ou
l'anneau est interconnecté avec au moins deux autres anneaux, chaque noeud autre qu'un noeud interconnecté avec l'anneau dans les deux autres anneaux a une injection d'horloge externe, tous les noeuds interconnectés avec chacun des deux autres anneaux dans l'anneau sont considérés comme un noeud ayant une injection d'horloge externe dans l'anneau, l'anneau est exécuté avec une configuration d'horloge ; et le noeud considéré comme ayant une injection d'horloge externe a différents états de fonctionnement dans les deux anneaux auxquels le noeud appartient.

5. Procédé de configuration selon la revendication 4, dans lequel :
si deux noeuds d'interconnexion sont considérés comme un seul noeud, le procédé comprend en outre :
déterminer des états de fonctionnement des deux noeuds d'interconnexion en tant qu'anneaux principaux en attente ;
configurer deux routes point à point d'horloges extraites dans deux directions entre les deux noeuds d'interconnexion, ou configurer une route point à point dans une direction d'extraction qui est la même que la direction d'extraction d'une horloge de fonctionnement de l'anneau principal, et configurer l'horloge extraite dans une direction d'extraction qui est la même que la direction d'extraction de l'horloge de fonctionnement de l'anneau principal en tant qu'horloge de fonctionnement.

6. Procédé de configuration d'un réseau de synchronisation, comprenant :
déterminer (110) au moins les informations suivantes : la topologie du réseau de synchronisation, et le nombre d'horloges externes activées par le réseau de synchronisation ; et
effectuer (120) une configuration d'horloge pour le réseau de synchronisation en fonction des informations déterminées,
dans lequel
si le réseau de synchronisation comprend un anneau ayant une horloge externe intégrée en un seul point, la configuration du réseau de synchronisation comprend : l'exécution de la configuration d'horloge pour l'anneau de la manière du plus court chemin en :
pour un noeud ayant une injection d'horloge externe dans l'anneau, configurer une horloge externe extraite ; et
pour chaque noeud n'ayant pas d'injection d'horloge externe dans l'anneau, déterminer un chemin le plus court du noeud n'ayant pas d'injection d'horloge externe à un noeud ayant une injection d'horloge externe, configurer pour le noeud n'ayant pas d'injection d'horloge externe deux routes point à point pour extraire des horloges de noeuds adjacents des deux côtés du noeud n'ayant pas d'injection d'horloge externe, et configurer une horloge extraite d'une des routes point à point située sur le chemin le plus court comme horloge de fonctionnement.

7. Procédé de configuration selon la revendication 6, dans lequel :
l'anneau est un anneau unique ; ou
l'anneau est interconnecté au moins avec un autre anneau, et un noeud de non-interconnexion dans l'anneau a une injection d'horloge externe ; ou
l'anneau est interconnecté avec au moins un autre anneau en un seul point, d'autres noeuds que le noeud d'interconnexion avec l'anneau dans l'autre anneau ont une injection d'horloge externe, et le noeud d'interconnexion est un noeud ayant une injection d'horloge externe dans l'anneau.

8. Procédé de configuration d'un réseau de synchronisation, comprenant :
déterminer (110) au moins les informations suivantes : la topologie du réseau de synchronisation, et le nombre d'horloges externes activées par le réseau de synchronisation ; et
effectuer (120) une configuration d'horloge pour le réseau de synchronisation selon les informations déterminées,
dans lequel :
si le réseau de synchronisation comprend un anneau ayant des horloges externes intégrées aux deux points, la configuration du réseau de synchronisation comprend : l'exécution de la configuration d'horloge pour l'anneau de la manière la plus courte possible, par :
pour chaque noeud ayant une injection d'horloge externe dans l'anneau, configurer une horloge externe extraite et configurer au moins une route point à point pour extraire une horloge d'un noeud adjacent d'un côté du noeud ayant une injection d'horloge externe ; et
pour chaque noeud n'ayant pas d'injection d'horloge externe dans l'anneau, déterminer un chemin le plus court du noeud n'ayant pas une injection d'horloge externe à un noeud ayant une injection d'horloge externe, configurer pour le noeud n'ayant pas une injection d'horloge externe deux routes point à point pour extraire des horloges de noeuds adjacents des deux côtés du noeud n'ayant pas une injection d'horloge externe, et configurer une horloge extraite de l'une des routes point à point situées sur le chemin le plus court comme horloge de fonctionnement.

9. Procédé de configuration selon la revendication 8, dans lequel :
pour chaque noeud ayant une injection d'horloge externe dans l'anneau, la configuration d'au moins une route point à point pour extraire une horloge d'un noeud adjacent d'un côté du noeud ayant une injection d'horloge externe comprend :
si un noeud adjacent commun existe entre deux noeuds ayant une injection d'horloge externe, pour chacun des deux noeuds, la configuration d'une seule route point à point pour extraire une horloge externe d'un noeud adjacent non commun pour le noeud ayant une injection d'horloge externe.

10. Procédé de configuration selon la revendication 8 ou 9, dans lequel :
l'anneau est un anneau unique ; ou
l'anneau est interconnecté avec au moins un autre anneau en deux points, d'autres noeuds que le noeud d'interconnexion avec l'anneau dans l'autre anneau ont une injection d'horloge externe, et les deux noeuds d'interconnexion de l'anneau et de l'autre anneau sont deux noeuds ayant une injection d'horloge externe dans l'anneau.

11. Procédé de configuration d'un réseau de synchronisation, comprenant :
déterminer (110) au moins les informations suivantes : la topologie du réseau de synchronisation, et le nombre d'horloges externes activées par le réseau de synchronisation ; et
effectuer (120) une configuration d'horloge pour le réseau de synchronisation selon les informations déterminées,
dans lequel :
si le réseau de synchronisation comprend deux anneaux interconnectés, et dans chacun des anneaux, un noeud autre qu'un noeud d'interconnexion des deux anneaux a une injection d'horloge externe, la configuration du réseau de synchronisation comprend : l'exécution de la configuration d'horloge pour les deux anneaux de la manière la plus courte en :
pour chaque noeud d'interconnexion des deux anneaux, déterminer un chemin le plus court du noeud d'interconnexion à un noeud ayant une injection d'horloge externe dans les deux anneaux, configurer pour le noeud d'interconnexion une pluralité de routes point à point pour extraire des horloges de noeuds adjacents du noeud d'interconnexion, et configurer une horloge extraite de l'une des routes point à point située sur le chemin le plus court comme horloge de fonctionnement ;
pour chaque noeud de non-interconnexion des deux anneaux, déterminer un chemin le plus court du noeud de non-interconnexion à un noeud ayant une injection d'horloge externe dans le même anneau, configurer pour le noeud de non-interconnexion deux routes point à point pour extraire des horloges de noeuds adjacents des deux côtés du noeud de non-interconnexion, et configurer une horloge extraite de l'une des routes point à point situées sur le chemin le plus court comme horloge de fonctionnement ; et
pour chaque noeud ayant une injection d'horloge externe dans les deux anneaux, configurer une horloge extraite et configurer deux routes point à point pour extraire des horloges de noeuds adjacents des deux côtés du noeud ayant une injection d'horloge externe.

12. Procédé de configuration pour un réseau de synchronisation, comprenant :
déterminer (110) au moins les informations suivantes : la topologie du réseau de synchronisation, et le nombre d'horloges externes activées par le réseau de synchronisation ; et
effectuer (120) une configuration d'horloge pour le réseau de synchronisation selon les informations déterminées,
dans lequel :
si le réseau de synchronisation comprend une route point à point ayant des horloges externes intégrées en un seul point, la configuration du réseau de synchronisation comprend : l'exécution de la configuration d'horloge pour la route point à point par :
pour un noeud ayant une injection d'horloge externe dans la route point à point, configurer une horloge externe extraite ; et
pour chaque noeud n'ayant pas d'injection d'horloge externe dans la route point à point, la configuration d'une route point à point pour extraire une horloge d'un noeud adjacent sur un côté du noeud n'ayant pas d'injection d'horloge externe qui est le plus proche d'un noeud ayant une injection d'horloge dans l'anneau.

13. Dispositif de configuration d'un réseau de synchronisation, comprenant :
un module d'acquisition d'informations (10) configuré pour déterminer au moins les informations suivantes : la topologie du réseau de synchronisation et le nombre d'horloges externes activées par le réseau de synchronisation ; et
un module de configuration d'horloge (20) configuré pour effectuer une configuration d'horloge pour le réseau de synchronisation selon les informations déterminées,
dans lequel :
si le réseau de synchronisation comprend un anneau ayant une horloge externe intégrée en un seul point, le module de configuration d'horloge (20) est configuré pour effectuer une configuration d'horloge pour l'anneau de manière annulaire, et comprend :
une première unité de configuration configurée pour, pour un noeud ayant une injection d'horloge externe dans l'anneau, configurer une horloge externe extraite ; et
une seconde unité de configuration configurée pour, pour chaque noeud n'ayant pas d'injection d'horloge externe dans l'anneau, configurer deux routes point à point pour extraire des horloges de noeuds adjacents des deux côtés du noeud n'ayant pas d'injection d'horloge externe, et configurer une horloge extraite dans une direction d'extraction qui est la même qu'une direction d'extraction prédéfinie d'une horloge de fonctionnement de l'anneau, en tant qu'horloge de fonctionnement, la direction d'extraction d'une horloge de fonctionnement de l'anneau étant dans le sens horaire ou antihoraire ;
l'anneau est un anneau unique ; ou
l'anneau est interconnecté au moins avec un autre anneau, et un noeud de non-interconnexion dans l'anneau a une injection d'horloge externe ; ou
l'anneau est interconnecté avec au moins un autre anneau, d'autres noeuds qu'un noeud d'interconnexion avec le noeud dans l'autre anneau ont une injection d'horloge externe, et le module de configuration d'horloge considère chaque noeud d'interconnexion de l'anneau et de l'autre anneau comme un noeud ayant une injection d'horloge externe dans l'anneau et effectue la configuration d'horloge pour l'anneau.

14. Dispositif de configuration d'un réseau de synchronisation, comprenant :
un module d'acquisition d'informations (10) configuré pour déterminer au moins les informations suivantes : la topologie du réseau de synchronisation et le nombre d'horloges externes activées par le réseau de synchronisation ; et
un module de configuration d'horloge (20) configuré pour effectuer une configuration d'horloge pour le réseau de synchronisation selon les informations déterminées,
dans lequel :
si le réseau de synchronisation comprend un anneau ayant des horloges externes intégrées en deux points, le module de configuration d'horloge (20) est configuré pour effectuer la configuration d'horloge pour l'anneau de manière annulaire, et comprend :
une première unité de configuration configurée pour, pour chaque noeud n'ayant aucune injection d'horloge externe dans l'anneau, configurer deux routes point à point pour extraire des horloges de noeuds adjacents des deux côtés du noeud n'ayant aucune injection d'horloge externe, et configurer une horloge extraite dans une direction d'extraction qui est la même qu'une direction d'extraction prédéfinie d'une horloge de fonctionnement de l'anneau, comme une horloge de fonctionnement, la direction d'extraction d'une horloge de fonctionnement de l'anneau étant dans le sens des aiguilles d'une montre ou dans le sens inverse des aiguilles d'une montre ; et
une seconde unité de configuration configurée pour configurer l'un des deux noeuds ayant une injection d'horloge externe dans l'anneau comme un noeud de fonctionnement principal, et un autre des deux noeuds comme un noeud de fonctionnement en attente ; pour le noeud de fonctionnement principal, configurer une horloge externe extraite et configurer une route point à point pour extraire une horloge d'un noeud adjacent d'un côté du noeud de fonctionnement principal dans une direction d'extraction étant opposée à la direction d'extraction de l'horloge de fonctionnement de l'anneau ; et pour le noeud de fonctionnement en attente, configurer une horloge externe extraite et configurer une route point à point pour extraire une horloge d'un noeud adjacent d'un côté du noeud de fonctionnement en attente dans une direction d'extraction qui est la même que la direction d'extraction de l'horloge de fonctionnement de l'anneau, et configurer l'horloge extraite de la route point à point comme l'horloge de fonctionnement ;
l'anneau est un anneau unique ; ou
l'anneau est interconnecté au moins avec un autre anneau, et deux noeuds non-interconnexion dans l'anneau ont une injection d'horloge externe ; ou
l'anneau est interconnecté avec au moins un autre anneau, d'autres noeuds qu'un noeud d'interconnexion dans les deux anneaux ont une injection d'horloge externe, le module de configuration d'horloge considère tous les noeuds d'interconnexion de l'anneau et de l'autre anneau comme un noeud ayant une injection d'horloge externe dans l'anneau, et effectue une configuration d'horloge pour l'anneau ; et le noeud étant considéré comme ayant une injection d'horloge externe a différents états de fonctionnement dans les deux anneaux auxquels le noeud appartient ; ou
l'anneau est interconnecté avec au moins deux autres anneaux, chaque noeud autre qu'un noeud interconnecté avec l'anneau dans les deux autres anneaux a une injection d'horloge externe, le module de configuration d'horloge considère tous les noeuds interconnectés avec chacun des deux autres anneaux dans l'anneau comme un noeud ayant une injection d'horloge externe dans l'anneau, et réalise la configuration d'horloge pour l'anneau ; et le noeud étant considéré comme ayant une injection d'horloge externe a différents états de fonctionnement dans les deux anneaux auxquels le noeud appartient.

15. Appareil de configuration selon la revendication 14, dans lequel :
si deux noeuds d'interconnexion sont considérés comme un seul noeud, le module de configuration d'horloge comprend en outre :
une troisième unité de configuration configurée pour déterminer l'état de fonctionnement des deux noeuds d'interconnexion en tant qu'anneaux principaux en attente ; configurer deux routes point à point d'horloges extraites dans deux directions entre les deux noeuds d'interconnexion, ou configurer une route point à point dans une direction d'extraction qui est la même que la direction d'extraction d'une horloge de fonctionnement de l'anneau principal, et configurer l'horloge extraite dans une direction d'extraction qui est la même que la direction d'extraction d'une horloge de fonctionnement de l'anneau principal en tant qu'horloge de fonctionnement.

16. Dispositif de configuration d'un réseau de synchronisation, comprenant :
un module d'acquisition d'informations (10) configuré pour déterminer au moins les informations suivantes : la topologie du réseau de synchronisation et le nombre d'horloges externes activées par le réseau de synchronisation ; et
un module de configuration d'horloge (20) configuré pour effectuer une configuration d'horloge pour le réseau de synchronisation en fonction des informations déterminées,
dans lequel:
si le réseau de synchronisation comprend un anneau ayant une horloge externe intégrée en un seul point, le module de configuration d'horloge (20) est configuré pour effectuer la configuration d'horloge pour l'anneau de la manière la plus courte, et comprend :
une première unité de configuration configurée pour, pour un noeud ayant une injection d'horloge externe dans l'anneau, configurer une horloge externe extraite ; et
une seconde unité de configuration configurée pour, pour chaque noeud n'ayant pas d'injection d'horloge externe dans l'anneau, déterminer un chemin le plus court du noeud n'ayant pas d'injection d'horloge externe à un noeud ayant une injection d'horloge externe, configurer pour le noeud n'ayant pas d'injection d'horloge externe deux routes point à point pour extraire des horloges de noeuds adjacents des deux côtés du noeud n'ayant pas d'injection d'horloge externe, et configurer une horloge extraite de l'une des routes point à point située sur le chemin le plus court comme horloge de fonctionnement ;
l'anneau est un anneau unique ; ou
l'anneau est interconnecté au moins avec un autre anneau, et un noeud de non-interconnexion dans l'anneau a une injection d'horloge externe ; ou
l'anneau est interconnecté avec au moins un autre anneau en un seul point, d'autres noeuds que le noeud d'interconnexion avec l'anneau dans l'autre anneau ont une injection d'horloge externe, et le noeud d'interconnexion est un noeud ayant une injection d'horloge externe dans l'anneau.

17. Dispositif de configuration d'un réseau de synchronisation, comprenant :
un module d'acquisition d'informations (10) configuré pour déterminer au moins les informations suivantes : la topologie du réseau de synchronisation et le nombre d'horloges externes activées par le réseau de synchronisation ; et
un module de configuration d'horloge (20) configuré pour effectuer une configuration d'horloge pour le réseau de synchronisation en fonction des informations déterminées,
dans lequel:
si le réseau de synchronisation comprend un anneau ayant des horloges externes intégrées aux deux points, le module de configuration d'horloge (20) est configuré pour effectuer la configuration d'horloge pour l'anneau de la manière la plus courte, et comprend :
une première unité de configuration configurée pour, pour chaque noeud ayant une injection d'horloge externe dans l'anneau, configurer une horloge externe extraite et configurer au moins une route point à point pour extraire une horloge d'un noeud adjacent d'un côté du noeud n'ayant pas d'injection d'horloge externe ; et
une deuxième unité de configuration configurée pour, pour chaque noeud n'ayant pas d'injection d'horloge externe dans l'anneau, déterminer un chemin le plus court du noeud n'ayant pas d'injection d'horloge externe à un noeud ayant une injection d'horloge externe, configurer pour le noeud n'ayant pas d'injection d'horloge externe deux routes point à point pour extraire des horloges de noeuds adjacents des deux côtés du noeud n'ayant pas d'injection d'horloge externe, et configurer une horloge extraite d'une route point à point située sur le chemin le plus court comme horloge de fonctionnement ;
la première unité de configuration configurant, pour chaque noeud ayant une injection d'horloge externe dans l'anneau, au moins une route point à point pour extraire une horloge d'un noeud adjacent d'un côté du noeud ayant une injection d'horloge externe comprend : si un noeud adjacent commun existe entre les deux noeuds ayant une injection d'horloge externe, pour chacun des deux noeuds ayant une injection d'horloge externe, la configuration d'une seule route point à point pour extraire une horloge externe d'un noeud adjacent non commun ;
l'anneau est un anneau unique ; ou
l'anneau est interconnecté avec au moins un autre anneau aux deux points, d'autres noeuds que le noeud d'interconnexion avec l'anneau dans l'autre anneau ont une injection d'horloge externe, et les deux noeuds d'interconnexion de l'anneau et de l'autre anneau sont deux noeuds ayant une injection d'horloge externe dans l'anneau.

18. Dispositif de configuration d'un réseau de synchronisation, comprenant :
un module d'acquisition d'informations (10) configuré pour déterminer au moins les informations suivantes : la topologie du réseau de synchronisation et le nombre d'horloges externes activées par le réseau de synchronisation ; et
un module de configuration d'horloge (20) configuré pour effectuer une configuration d'horloge pour le réseau de synchronisation selon les informations déterminées,
dans lequel :
si le réseau de synchronisation comprend deux anneaux interconnectés, et dans chacun des anneaux, un noeud autre qu'un noeud d'interconnexion des deux anneaux a une injection d'horloge externe, le module de configuration d'horloge (20) est configuré pour effectuer la configuration d'horloge pour les deux anneaux de la manière la plus courte, et comprend :
une première unité de configuration configurée pour, pour chaque noeud d'interconnexion des deux anneaux, déterminer un chemin le plus court du noeud d'interconnexion des deux anneaux à un noeud ayant une injection d'horloge externe dans les deux anneaux, configurer pour le noeud d'interconnexion des deux anneaux une pluralité de routes point à point pour extraire des horloges de noeuds adjacents du noeud d'interconnexion des deux anneaux, et configurer une horloge extraite de l'une des routes point à point située sur le chemin le plus court comme l'horloge de fonctionnement ;
une deuxième unité de configuration configurée pour, pour chaque noeud de non-interconnexion des deux anneaux, déterminer un chemin le plus court du noeud de non-interconnexion des deux anneaux à un noeud ayant une injection d'horloge externe dans le même anneau, configurer pour le noeud de non-interconnexion des deux anneaux deux routes point à point pour extraire des horloges de noeuds adjacents des deux côtés du noeud de non-interconnexion des deux anneaux, et configurer une horloge extraite de l'une des routes point à point situées sur le chemin le plus court comme l'horloge de fonctionnement ; et
une troisième unité de configuration configurée pour, pour chaque noeud ayant une injection d'horloge externe dans les deux anneaux, configurer une horloge extraite et configurer deux routes point à point pour extraire des horloges de noeuds adjacents des deux côtés du noeud ayant une injection d'horloge externe dans les deux anneaux.

19. Appareil de configuration pour un réseau de synchronisation, comprenant :
un module d'acquisition d'informations (10) configuré pour déterminer au moins les informations suivantes : la topologie du réseau de synchronisation et le nombre d'horloges externes activées par le réseau de synchronisation ; et
un module de configuration d'horloge (20) configuré pour effectuer une configuration d'horloge pour le réseau de synchronisation selon les informations déterminées,
dans lequel :
si le réseau de synchronisation comprend une route point à point ayant des horloges externes intégrées en un seul point, le module de configuration d'horloge est configuré pour réaliser la configuration d'horloge pour la route point à point, et comprend :
une première unité de configuration configurée pour, pour un noeud ayant une injection d'horloge externe dans la route point à point, configurer une horloge externe extraite ; et
une deuxième unité de configuration configurée pour, pour chaque noeud n'ayant pas d'injection d'horloge externe dans la route point à point, configurer une route point à point pour extraire une horloge d'un noeud adjacent d'un côté du noeud n'ayant pas d'injection d'horloge externe qui est le plus proche d'un noeud ayant une injection d'horloge dans l'anneau.

20. Support de stockage lisible par ordinateur, stockant des instructions de programme qui, si elles sont exécutées par un processeur, mettent en oeuvre le procédé de configuration pour un réseau de synchronisation selon l'une quelconque des revendications 1-12.
